# EUROPEAN PATENT APPLICATION

(11) **EP 4 733 879 A1**
(43) Date of publication of application: **29.04.2026**
(21) Application number: 25209926.2
(22) Date of filing: 20.10.2025
(51) Int. Cl.: G05D 1/648, A01B 69/00, G01C 21/00

(54) **ROUTE GENERATION METHOD, ROUTE GENERATION PROGRAM, AND ROUTE GENERATION SYSTEM**

(30) Priority: 22.10.2024 JP 2024185855
(71) Applicant: Yanmar Holdings Co., Ltd., Osaka-shi, Osaka (JP)
(72) Inventor: YAMAGUCHI, Yuji, Okayama-shi (JP); MURAYAMA, Masaaki, Okayama-shi (JP); NISHII, Yasuto, Okayama-shi (JP); LEE, Seungkyu, Okayama-shi (JP)
(74) Representative: Sekiguchi, Kazuya

(57) **Abstract**

[Problem] Provided are a route generation method, a route generation program, and a route generation system capable of improving workability of an operator by easily generating a travel route desired by the operator.

[Solution] In a travel system 10, when stop information of travel or work is acquired while a combine harvester 1 is traveling on a first travel route, a generation processing unit 312 generates a second travel route for travel subsequently to the first travel route based on a predetermined position corresponding to a travel stop position or a work stop position of the combine harvester 1 and a work width of the combine harvester 1.

## Description

### TECHNICAL FIELD

The present invention relates to a technique for generating a route on which a work vehicle travels.

### BACKGROUND ART

Conventionally, there has been known a technique for acquiring a shape of a field in advance, generating a travel route for a work vehicle to perform work based on the shape of the field, and causing the work vehicle to autonomously travel along the travel route (see, for example, Patent Document 1).

### PRIOR ART DOCUMENT

### PATENT DOCUMENT

Patent Document 1: JP-A-2021-83387

### SUMMARY OF INVENTION

### TECHNICAL PROBLEM

In the related art, the travel route is generated in advance for the entire field, and the work vehicle is caused to autonomously travel after the entire travel route is generated. Therefore, there is a case where the travel route deviates from a route intended by an operator depending on a state of the field and/or a work status. In this case, there is a problem that workability deteriorates as the operator measures the field again or generates a travel route again.

An object of the present invention is to provide a route generation method, a route generation program, and a route generation system capable of improving workability of an operator by easily generating a travel route desired by the operator.

### SOLUTION TO PROBLEM

A route generation method according to the present invention is a method for generating a travel route for a work vehicle to perform predetermined work in a work area. The route generation method generates a second travel route for travel subsequently to a first travel route based on a predetermined position corresponding to a travel stop position or a work stop position of the work vehicle and a work width of the work vehicle when stop information of travel or work is acquired while the work vehicle is traveling on the first travel route.

A route generation program according to the present invention is a program for generating a travel route for a work vehicle to perform predetermined work in a work area. The route generation program is a program causing one or a plurality of processors to execute generating, when stop information of travel or the work is acquired while the work vehicle is traveling on a first travel route, a second travel route for travel subsequently to the first travel route based on a predetermined position corresponding to a travel stop position or a work stop position of the work vehicle and a work width of the work vehicle.

A route generation system according to the present invention is a system that generates a travel route for a work vehicle to perform predetermined work in a work area. The route generation system includes a generation processing unit configured to generate a second travel route for travel subsequently to a first travel route based on a predetermined position corresponding to a travel stop position or a work stop position of the work vehicle and a work width of the work vehicle when stop information of travel or work is acquired while the work vehicle is traveling on the first travel route.

### ADVANTAGEOUS EFFECTS OF INVENTION

According to the present invention, it is possible to provide the route generation method, the route generation program, and the route generation system capable of improving the workability of the operator by easily generating the travel route desired by the operator.

### BRIEF DESCRIPTION OF DRAWINGS

Fig. 1 is a functional block diagram showing a configuration of a travel system according to a first embodiment of the present invention;
Fig. 2 is an external view showing a configuration of a combine harvester according to the first embodiment of the present invention;
Fig. 3 is a view showing an example of a target route set in a field according to the first embodiment of the present invention;
Fig. 4A is a view showing an example of a work procedure of the combine harvester according to the first embodiment of the present invention;
Fig. 4B is a view showing an example of the work procedure of the combine harvester according to the first embodiment of the present invention;
Fig. 4C is a view showing an example of the work procedure of the combine harvester according to the first embodiment of the present invention;
Fig. 5A is a view showing an example of corner reaping work of the combine harvester according to the first embodiment of the present invention;
Fig. 5B is a view showing an example of the corner reaping work of the combine harvester according to the first embodiment of the present invention;
Fig. 6A is a view showing an example of an operation screen displayed on an operation terminal according to the first embodiment of the present invention;
Fig. 6B is a view showing an example of a route creation result screen displayed on the operation terminal according to the first embodiment of the present invention;
Fig. 7A is a view showing a specific example of a position (non-work height) of a reaping unit of the combine harvester according to the first embodiment of the present invention;
Fig. 7B is a view showing a specific example of a position (intermediate height) of the reaping unit of the combine harvester according to the first embodiment of the present invention;
Fig. 7C is a view showing a specific example of a position (work height) of the reaping unit of the combine harvester according to the first embodiment of the present invention;
Fig. 8A is a view showing a specific example of reaping work in an outermost peripheral area of a combine harvester according to the first embodiment of the present invention;
Fig. 8B is a view showing a specific example of the reaping work in the outermost peripheral area of the combine harvester according to the first embodiment of the present invention;
Fig. 8C is a view showing a specific example of the reaping work in the outermost peripheral area of the combine harvester according to the first embodiment of the present invention;
Fig. 8D is a view showing a specific example of the reaping work in the outermost peripheral area of the combine harvester according to the first embodiment of the present invention;
Fig. 8E is a view showing a specific example of the reaping work in the outermost peripheral area of the combine harvester according to the first embodiment of the present invention;
Fig. 8F is a view showing a specific example of the reaping work in the outermost peripheral area of the combine harvester according to the first embodiment of the present invention;
Fig. 8G is a view showing a specific example of the reaping work in the outermost peripheral area of the combine harvester according to the first embodiment of the present invention;
Fig. 8H is a view showing a specific example of the reaping work in the outermost peripheral area of the combine harvester according to the first embodiment of the present invention;
Fig. 9A is a view showing a specific example of the reaping work in the outermost peripheral area of the combine harvester according to the first embodiment of the present invention;
Fig. 9B is a view showing a specific example of the reaping work in the outermost peripheral area of the combine harvester according to the first embodiment of the present invention;
Fig. 9C is a view showing a specific example of the reaping work in the outermost peripheral area of the combine harvester according to the first embodiment of the present invention;
Fig. 10 is a view showing a specific example of turning travel of the combine harvester according to the first embodiment of the present invention;
Fig. 11 is a view showing a state in which the reaping work in the outermost peripheral area of the combine harvester according to the first embodiment of the present invention has finished;
Fig. 12 is a view showing an example of a corner reaping route according to the first embodiment of the present invention;
Fig. 13 is a view showing an example of an inner peripheral route in an inner peripheral area of a field according to the first embodiment of the present invention;
Fig. 14 is a view showing an example of the inner peripheral route in the inner peripheral area of the field according to the first embodiment of the present invention;
Fig. 15 is a view showing an example of an autonomous travel route in the inner peripheral area of the field according to the first embodiment of the present invention;
Fig. 16 is a view showing another method for generating the corner reaping route according to the first embodiment of the present invention;
Fig. 17 is a flowchart showing an example of a procedure of route generation processing executed by a travel system according to the first embodiment of the present invention;
Fig. 18A is a view showing a specific example of a method for generating an inclined route according to the first embodiment of the present invention;
Fig. 18B is a view showing a specific example of the method for generating the inclined route according to the first embodiment of the present invention;
Fig. 19 is a view showing a specific example of the inclined route generated at an entrance of the field according to the first embodiment of the present invention;
Fig. 20A is a view showing a specific example of the inclined route formed in an acute corner of the field according to the first embodiment of the present invention;
Fig. 20B is a view showing a specific example of the inclined route formed at an obtuse corner of the field according to the first embodiment of the present invention;
Fig. 21 is a view showing an example of a travel method of a combine harvester according to a second embodiment of the present invention;
Fig. 22 is a view showing an example of the travel method of the combine harvester according to the second embodiment of the present invention;
Fig. 23A is a view showing an example of the travel method of the combine harvester according to the second embodiment of the present invention;
Fig. 23B is a view showing an example of the travel method of the combine harvester according to the second embodiment of the present invention;
Fig. 24 is a flowchart showing an example of a procedure of autonomous travel processing executed by a travel system according to the second embodiment of the present invention;
Fig. 25 is a view showing another example of the travel method of the combine harvester according to the second embodiment of the present invention;
Fig. 26A is a view showing an example of a travel method of a combine harvester according to a third embodiment of the present invention;
Fig. 26B is a view showing an example of the travel method of the combine harvester according to the third embodiment of the present invention;
Fig. 26C is a view showing an example of the travel method of the combine harvester according to the third embodiment of the present invention;
Fig. 26D is a view showing an example of the travel method of the combine harvester according to the third embodiment of the present invention;
Fig. 26E is a view showing an example of the travel method of the combine harvester according to the third embodiment of the present invention;
Fig. 27A is a view showing a specific example of a method for generating an inclined route according to the third embodiment of the present invention;
Fig. 27B is a view showing a specific example of the method for generating the inclined route according to the third embodiment of the present invention;
Fig. 28A is a view showing a specific example of the method for generating the inclined route according to the third embodiment of the present invention;
Fig. 28B is a view showing a specific example of the method for generating the inclined route according to the third embodiment of the present invention;
Fig. 29 is a view showing another example of the travel method of the combine harvester according to the third embodiment of the present invention;
Fig. 30 is a view showing another example of the travel method of the combine harvester according to the third embodiment of the present invention;
Fig. 31 is a flowchart showing an example of a procedure of route generation processing executed by a travel system according to the third embodiment of the present invention; and
Fig. 32 is a view showing a method for setting a recommended area according to the third embodiment of the present invention.

### DESCRIPTION OF EMBODIMENTS

The following embodiments are embodied examples of the present invention, and do not limit the technical scope of the present invention.

### [First embodiment]

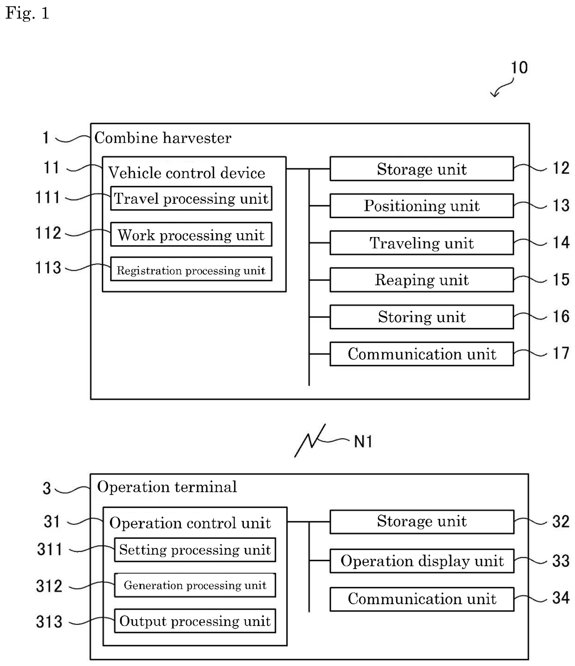

As an example of a work vehicle of the present invention, a combine harvester 1 will be described. As shown in Fig. 1, a travel system 10 according to a first embodiment of the present invention includes the combine harvester 1 and an operation terminal 3. The combine harvester 1 and the operation terminal 3 can communicate with each other via a communication network N1. For example, the combine harvester 1 and the operation terminal 3 can communicate via a mobile telephone network, a packet network, or a wireless LAN.

The combine harvester 1 is a work vehicle that performs agricultural work such as reaping in a field (an example of predetermined work of the present invention). The combine harvester 1 performs work while traveling, and transmits, to the operation terminal 3, GNSS information of a GNSS antenna mounted on the combine harvester 1, that is, an own vehicle position of the combine harvester 1, as measurement point data.

In addition, the combine harvester 1 can perform autonomous travel along a preset target route. Note that the combine harvester 1 may be configured to perform manual travel in a partial area (for example, an outermost peripheral area) of the field and perform autonomous travel in another area (for example, an inner peripheral area). In addition, the combine harvester 1 may be configured to autonomously travel (be automatically steered) on a linear route and to manually travel (be manually steered) on a non-linear route (such as a turning route). In addition, the combine harvester 1 may be configured to receive various types of setting information from the operation terminal 3 and perform autonomous travel according to the setting information.

The operation terminal 3 is a portable terminal capable of remotely operating the combine harvester 1, and includes, for example, a tablet terminal, a notebook personal computer, a smartphone, or the like. Note that an operation device similar to the operation terminal 3 may be mounted on the combine harvester 1.

An operator (worker) can perform setting operation on various setting items (for example, setting of an autonomous travel route) on the operation terminal 3. In addition, the operation terminal 3 displays information such as a work status and a travel status of the combine harvester 1 during autonomous travel. The operator can grasp the work status and the travel status on the operation terminal 3.

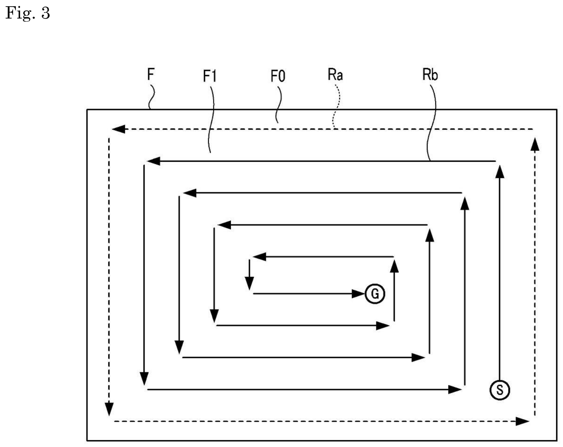

Fig. 3 shows an example of a target route R set for a field F. For example, in the field F, the combine harvester 1 performs reaping work while traveling along an outermost peripheral route Ra in an outermost peripheral area FO on a boundary side of the field F, and performs reaping work while traveling along an inner peripheral route Rb in an inner peripheral area F1 inside the outermost peripheral area FO. The target route R includes the outermost peripheral route Ra and the inner peripheral route Rb. The combine harvester 1 may perform reaping work while traveling along the outermost peripheral route Ra in accordance with the manual operation (manual steering) by the operator, and perform reaping work while autonomously traveling along the inner peripheral route Rb. In addition, the combine harvester 1 may perform reaping work while autonomously traveling along the outermost peripheral route Ra and the inner peripheral route Rb. In addition, in the outermost peripheral route Ra, the combine harvester 1 may autonomously travel on a linear route and may manually travel on a non-linear route (such as a turning route).

In the present embodiment, description will be given by exemplifying a configuration in which the combine harvester 1 performs travel and reaping work (the corner reaping work) in at least a part (the corners and an angular portion of field F) of the outermost peripheral route Ra in accordance with the manual operation by the operator, and performs reaping work while autonomously traveling the inner peripheral area F1 along the inner peripheral route Rb (an autonomous travel route) from a start position S (the autonomous travel start position) to an end position G (the autonomous travel end position). Note that Fig. 3 shows a work method ("round reaping") in which the combine harvester 1 performs reaping work while circling from the start position S to the end position G from the outer peripheral side toward the inner peripheral side. However, as another embodiment, the combine harvester 1 may perform reaping work while reciprocating from the start position S to the end position G ("reciprocating reaping").

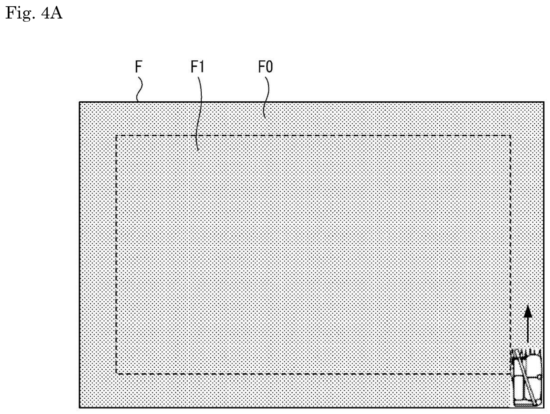

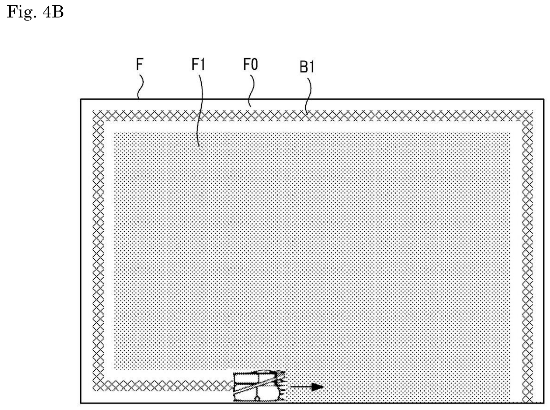

An example of a work procedure of the combine harvester 1 will be described with reference to Figs. 4A to 4C. First, as shown in Fig. 4A, when starting to travel in response to the operation of the operator at a predetermined position (for example, a corner) of the field F, the combine harvester 1 travels along an outer periphery of the field F in the outermost peripheral area F0 while reaping grain culms. In addition, when threshing the reaped grain culms, the combine harvester 1 discharges waste straws such as straw debris from the rear of a machine body thereof to the outside. As a result, as shown in Fig. 4B, waste straws B1 are accumulated on a traveling track of the combine harvester 1, and a waste straw row is formed on a route on which the combine harvester 1 has finished the reaping work. Note that the combine harvester 1 is set to discharge the waste straws of the reaped grain culms at positions of the grain culms to be reaped, and is configured to be able to grasp the positions, a width (lateral width of the waste straw row in the left-right direction), a length, and the like of the waste straws B1. For example, the waste straws B1 are discharged with a width narrower than a lateral width of the machine body with the center of the combine harvester 1 in the left-right direction as a reference.

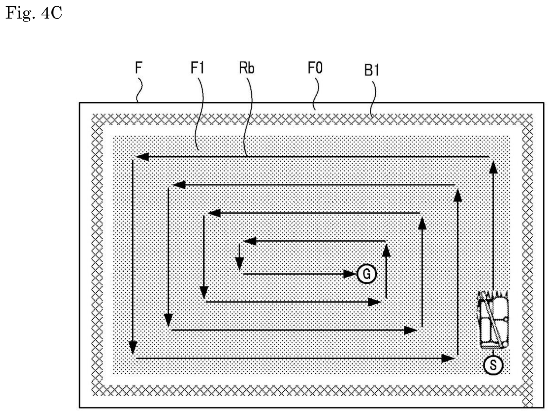

When ending the reaping work in the outermost peripheral area FO, the combine harvester 1 starts autonomous travel and reaping work from the start position S in the inner peripheral area F1 as shown in Fig. 4C. The combine harvester 1 performs the reaping work while autonomously traveling along the inner peripheral route Rb, and ends the autonomous travel and the reaping work when reaching the end position G.

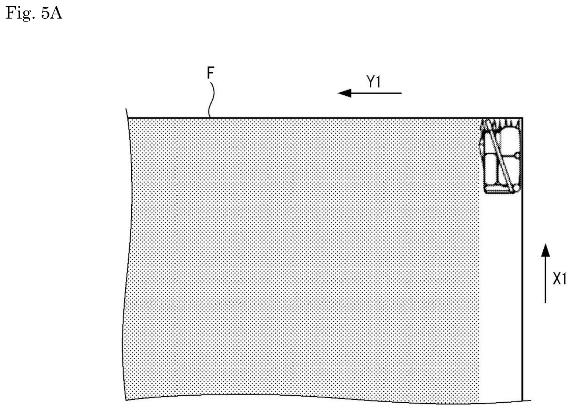

Here, the combine harvester 1 changes a direction (turns) at corners of the field F when performing reaping work. For example, as shown in Fig. 5A, the combine harvester 1 changes an orientation of the combine harvester 1 from a direction X1 to a direction Y1 at a corner (an upper right corner in Fig. 5A) when performing reaping work on one side (a right side in Fig. 5A) of the field F in the direction X1 and then performing reaping work on another side (an upper side in Fig. 5A) of the field F in the direction Y1. As described above, the combine harvester 1 needs a turning area (direction changing area) for moving (turning) to the next route at each corner of the field F.

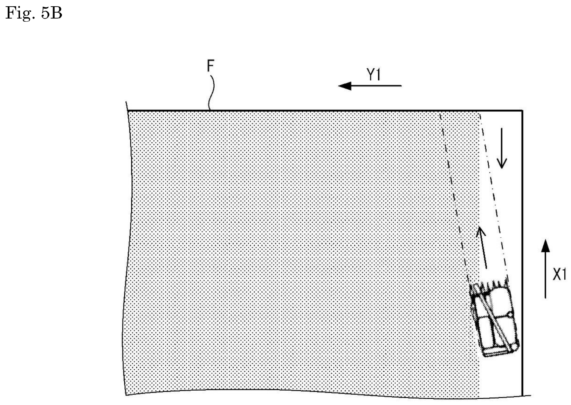

In order to generate the turning area, as shown in Fig. 5B, when finishing the reaping work in the direction X1 (see Fig. 5A), the combine harvester 1 travels backward to a predetermined position and stops, and changes a traveling direction and performs reaping work in an oblique direction while traveling forward at the corner. The combine harvester 1 repeatedly travels forward and backward until an area (turning area) in which an orientation of a vehicle body can be changed (the direction can be changed) to the direction Y1 can be secured to perform the reaping work (hereinafter, referred to as corner reaping work) at the corner.

The travel system 10 according to the present embodiment has a configuration to cause the combine harvester 1 to perform corner reaping work in the outermost peripheral area F0. Note that the travel system 10 may also perform corner reaping work similar to the corner reaping work in the outermost peripheral area F0 when the turning area cannot be secured in areas corresponding to the second and subsequent rounds inside the outermost peripheral area FO.

### [Operation terminal 3]

As shown in Fig. 1, the operation terminal 3 is an information processing apparatus including an operation control unit 31, a storage unit 32, an operation display unit 33, a communication unit 34, and the like. The operation terminal 3 includes, for example, a tablet terminal.

The communication unit 34 is a communication interface for connecting the operation terminal 3 to the communication network N1 in a wired or wireless manner and executing data communication according to a predetermined communication protocol, with an external device such as one or a plurality of combine harvesters 1 via the communication network N1.

The operation display unit 33 is a user interface including a display unit such as a liquid crystal display or an organic EL display that displays various types of information, and an operation unit such as a touch panel, a mouse, or a keyboard that receives operation. The operator can operate the operation unit on a setting screen (not shown) displayed on the display unit to perform operation to register various types of setting information. In addition, the operator can operate the operation unit to instruct the combine harvester 1 to autonomously travel. In addition, the operator can grasp the travel status of the combine harvester 1 autonomously traveling in the field F from a travel trajectory displayed on the operation terminal 3 at a location away from the combine harvester 1. In addition, the operator can grasp the work status displayed on the operation terminal 3 at a location away from the combine harvester 1.

The storage unit 32 is a non-volatile storage unit such as a hard disk drive (HDD), a solid state drive (SSD), or a flash memory that stores various types of information. The storage unit 32 stores a control program for causing the operation control unit 31 to execute predetermined processing. For example, the control program is non-temporarily recorded in a computer-readable recording medium such as a flash ROM, an EEPROM, a CD, or a DVD, and is read by a predetermined reading device (not shown) included in the operation terminal 3 and stored in the storage unit 32. Note that the control program may be downloaded from a server (not shown) to the operation terminal 3 via the communication network N1 and stored in the storage unit 32. In addition, the storage unit 32 may store work information transmitted from the combine harvester 1. Note that the control program includes control programs corresponding to the first to fourth configurations, respectively.

In addition, a dedicated application for causing the combine harvester 1 to autonomously travel is installed in the storage unit 32. The operation control unit 31 activates the dedicated application to perform a process of setting various types of setting information related to the combine harvester 1, instructs the combine harvester 1 to autonomously travel, and the like.

The operation control unit 31 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory for various types of processing executed by the CPU. Then, the operation control unit 31 controls the operation terminal 3 by executing, with the CPU, various control programs stored in advance in the ROM or the storage unit 32.

As shown in Fig. 1, the operation control unit 31 includes various processing units such as a setting processing unit 311, a generation processing unit 312, and an output processing unit 313. Note that the operation control unit 31 functions as the various processing units by executing, with the CPU, various types of processing according to a control program. In addition, some or all of the processing units may include an electronic circuit. Note that the control program may be a program for causing a plurality of processors to function as the processing unit.

The setting processing unit 311 sets various types of setting information for the combine harvester 1 to perform autonomous travel. Specifically, the setting processing unit 311 sets field information related to the field F. The field information includes, for example, a shape, a size, and position information (such as coordinates) of the outermost periphery of the field, measurement point data constituting the outermost periphery of the field, a shape, a size, and position information (such as coordinates) of a work area in the field where work is performed in the field F, and the like. In addition, the field information includes an address of the field F, a registration name and a registration date of the field information, a registration name and a registration date of the work area in the field, and the like. The setting processing unit 311 receives registration operation of the field information performed by the operator and sets the field information.

In addition, the setting processing unit 311 sets a traveling speed (vehicle speed) of the combine harvester 1. For example, the operator can set a straight-traveling vehicle speed, a turning vehicle speed, and a reverse vehicle speed during work and during non-work on the setting screen.

In addition to the information described above, the setting processing unit 311 sets well-known information such as a type (the maximum number of rows to be reaped), a vehicle width, and a vehicle length of the combine harvester 1.

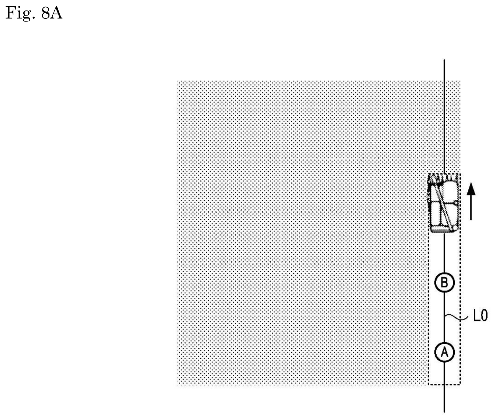

The generation processing unit 312 generates an autonomous travel route for the combine harvester 1 to perform predetermined work on a work target in the field F. Specifically, the generation processing unit 312 generates the target route R (the outermost peripheral route Ra and the inner peripheral route Rb) including a work route and a turning route. For example, the generation processing unit 312 generates the outermost peripheral route Ra in accordance with the registration operation during the manual travel by the operator. For example, when the operator performs operation to register two reference points (a point A and a point B shown in Fig. 8A) when the combine harvester 1 is caused to travel straight in the outermost peripheral area F0 of the field F, the generation processing unit 312 sets a straight line (a reference line L0) passing through the two reference points as the outermost peripheral route Ra (see Fig. 3). The generation processing unit 312 sets the outermost peripheral route Ra corresponding to the respective sides of the outer periphery of the field F. A method for generating the outermost peripheral route Ra is not limited thereto, and the generation processing unit 312 may generate a route parallel to outline sides of the field F as the outermost peripheral route Ra in a case where a shape of the field F has already been registered, or may create the outermost peripheral route Ra based on a vehicle direction when the operator has performed predetermined operation.

Note that, in a case where the shape of the field F is unregistered, the setting processing unit 311 may register the shape and size of the field F based on a travel trajectory (measurement point data) acquired while the operator causes the combine harvester 1 to perform manual travel and reaping work. In addition, the setting processing unit 311 may register the shape and size of the field F based on a travel trajectory acquired while the operator causes the combine harvester 1 to perform the manual travel and the reaping work along the outermost peripheral route Ra.

In addition, the operator selects a route pattern, a turning type, and the like on a setting screen (not shown). The route patterns include "round reaping" in which circling of a stroke along an inner periphery of the inner peripheral area F1 is repeated while shifting the circling toward the center in a rectangular spiral pattern, and "reciprocating reaping" in which reciprocating travel is performed for a plurality of strokes, and the operator selects any one of the route patterns. The turning type includes a "small turn" having a small turning radius is small, a "large turn (soft)" in having a large turning radius, and a "standard" therebetween, and the operator selects any one of the turning types. In addition, the operator can correct the turning radius on the setting screen. In addition, the operator selects whether or not to perform the corner reaping work of the field F on the setting screen.

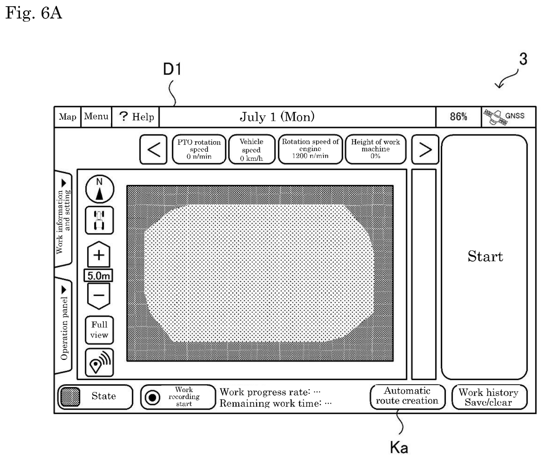

The generation processing unit 312 generates the inner peripheral route Rb (the autonomous travel route) from the start position S to the end position G based on information such as the field information, the route pattern, the turning type, the turning radius, and the presence or absence of the corner reaping work. For example, when the operator presses a route generation button Ka ("automatic route creation") on an operation screen D1 (see Fig. 6A) at the time when the reaping work in the outermost peripheral area F0 has finished, the generation processing unit 312 generates the inner peripheral route Rb.

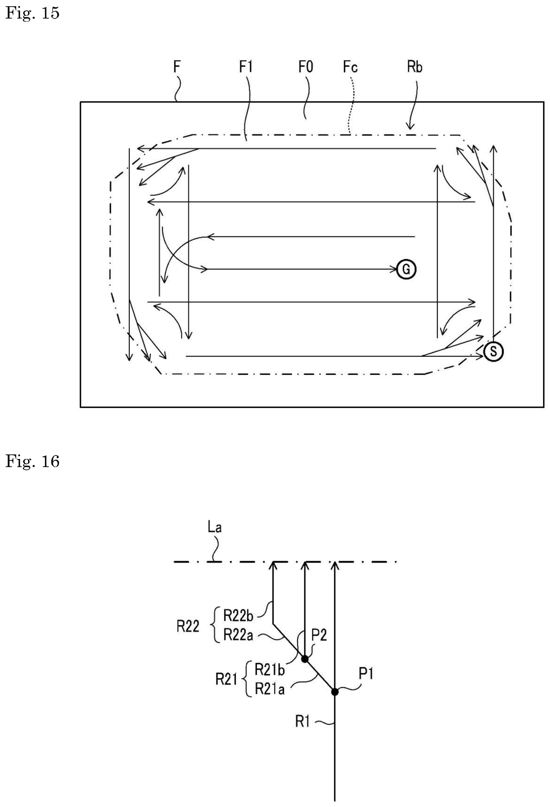

Note that the generation processing unit 312 may set a current position of the combine harvester 1 when generating the inner peripheral route Rb as the start position S, or may set a position designated by the operator on the map as the start position S. In addition, when the corner reaping work is set as "present" on the setting screen, the generation processing unit 312 generates an autonomous travel route (hereinafter, referred to as a corner reaping route) for causing the combine harvester 1 to perform the corner reaping work while autonomously traveling. The corner reaping route includes a straight route in each of the forward direction and the backward direction and a turning route. In addition, the corner reaping route may be configured to be included in the inner peripheral route Rb corresponding to one or a plurality of (for example, two to three) rounds on the outer peripheral side of the inner peripheral route Rb, and not to be included in the inner peripheral route Rb on the inner peripheral side thereof (see Fig. 15).

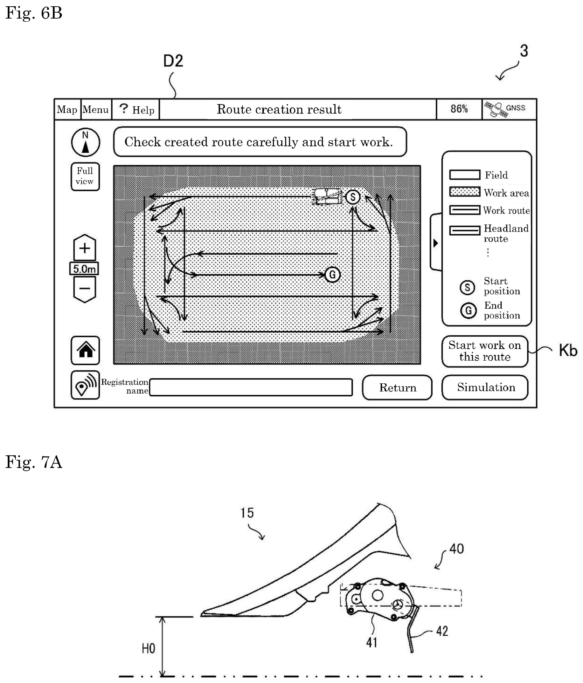

After generating the inner peripheral route Rb, the generation processing unit 312 displays the generated route information on a route creation result screen D2 (see Fig. 6B). In addition, the generation processing unit 312 registers the generated inner peripheral route Rb in association with the field F (the field registration name). A specific example of a method for generating the target route R will be described later.

The output processing unit 313 outputs various types of setting information set by the setting processing unit 311 to the combine harvester 1. In addition, the output processing unit 313 outputs an autonomous travel start instruction (work start instruction) and an autonomous travel end instruction (work end instruction) to the combine harvester 1 based on the operation of the operator.

For example, when the combine harvester 1 satisfies autonomous travel start conditions, that is, when a position of the combine harvester 1 is within a predetermined distance from the start position S, a direction of the combine harvester 1 is within a predetermined angle with respect to a direction of a work route, and other autonomous travel start conditions are also satisfied, the autonomous travel is permitted. When the autonomous travel is permitted, the operator can perform autonomous travel start instruction operation on the operation terminal 3. When the operation control unit 31 receives the autonomous travel start instruction operation from the operator, the output processing unit 313 outputs the autonomous travel start instruction to the combine harvester 1. For example, the operator presses an autonomous travel start operation button Kb on the route creation result screen D2 (see Fig. 6B) or the start button on the operation screen D1 (see Fig. 6A) to start the autonomous travel.

When acquiring the autonomous travel start instruction from the operation terminal 3, the vehicle control device 11 of the combine harvester 1 causes the combine harvester 1 to start autonomous travel and reaping work, and to execute autonomous travel and reaping work along the inner peripheral route Rb from the start position S to the end position G. In addition, when the operation control unit 31 receives autonomous travel stop instruction operation from the operator, the output processing unit 313 outputs an autonomous travel stop instruction to the combine harvester 1. As a result, the vehicle control device 11 acquires the autonomous travel stop instruction from the operation terminal 3. When acquiring the autonomous travel stop instruction, the vehicle control device 11 stops the autonomous travel and the reaping work of the combine harvester 1.

Note that the operation terminal 3 may be able to access a website (agricultural support site) of an agricultural support service provided by a server (not shown) via the communication network N1. In this case, the operation terminal 3 can function as an operation terminal of the server, by the operation control unit 31 executing a browser program. Then, the server includes the above-described individual processing units and executes the individual processes.

### [Combine harvester 1]

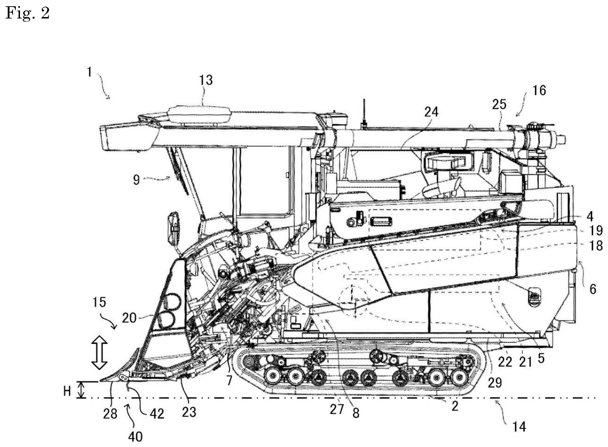

Fig. 2 is an external view of the combine harvester 1 as viewed from the side. As shown in Figs. 1 and 2, the combine harvester 1 includes a threshing unit 4, a sorting unit 5, a waste straw processing unit 6, a power unit 8, a steering unit 9, a vehicle control device 11, a storage unit 12, a positioning unit 13, a traveling unit 14, a reaping unit 15 (an example of the work machine of the present invention), a storing unit 16, a communication unit 17, and the like. While the combine harvester 1 travels by the traveling unit 14, the threshing unit 4 threshes grain culms reaped by the reaping unit 15, and the sorting unit 5 sorts and stores grains in the storing unit 16. The combine harvester 1 causes the waste straw processing unit 6 to process waste straws after the threshing. The combine harvester 1 drives the traveling unit 14, the reaping unit 15, the storing unit 16, the threshing unit 4, the sorting unit 5, and the waste straw processing unit 6 by power supplied from the power unit 8.

The traveling unit 14 is provided below a machine body frame 29, and includes a pair of left and right crawler-type traveling devices 2 and a transmission (not shown). The traveling unit 14 rotates crawlers of the crawler-type traveling devices 2 by the power (for example, rotational power) transmitted from the engine 27 of the power unit 8 to cause the combine harvester 1 to travel in the front-rear direction or turn in the left-right direction. The transmission transmits the power (rotational power) of the power unit 8 to the crawler-type traveling devices 2, and can also change the rotational power.

The reaping unit 15 is provided in front of the traveling unit 14 and performs reaping work for rows within the reaping-possible row number. The reaping unit 15 includes a divider 28, a raising device 20, a cutting device 23, a conveying device 7, and a reaping height detection device 40.

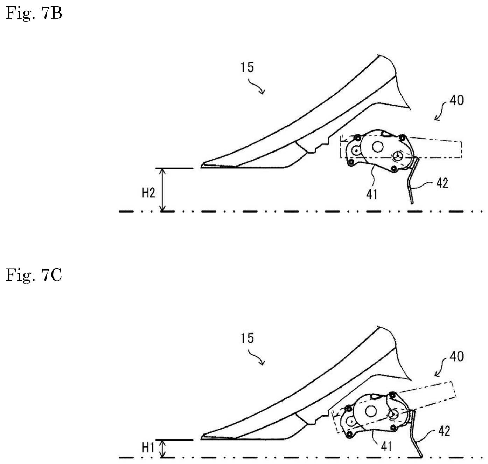

As shown in Figs. 7A to 7C, the reaping height detection device 40 includes a device main body 41, a ground-contact body 42, a detection sensor (not shown), and the like, and detects a height H (see Fig. 2) of the reaping unit 15. For example, as shown in Fig. 7C, the detection sensor detects an amount of rotation of the device main body 41 when the reaping unit 15 descends and the ground-contact body 42 comes into contact with the ground, and the reaping height detection device 40 detects the height H based on a detection signal of the detection sensor. The vehicle control device 11 (a work processing unit 112) operates a driving part (a hydraulic cylinder and the like) of the reaping unit 15 to adjust the height H so as to maintain the height H detected by the reaping height detection device 40 at a set height (work height H1). Fig. 7A shows a height (non-work height H0) of the reaping unit 15 when the combine harvester 1 is not working, and Fig. 7B shows a height (intermediate height H2) of the reaping unit 15 when the combine harvester 1 is working and at which the waste straws B1 can be prevented from being entangled. As described above, the reaping unit 15 is configured to be switchable among a height during non-work (the non-work height H0), a height during work (the work height H1), and a height therebetween (the intermediate height H2). Note that the intermediate height H2 may be a position set during non-work or a position set during work.

The divider 28 divides grain culms of the field F into for each row, and guides, to the raising device 20, grain culms for a predetermined number of rows within the reaping-possible number. The raising device 20 raises the grain culms guided by the divider 28. The cutting device 23 cuts the grain culms raised by the raising device 20. The conveying device 7 conveys the grain culms cut by the cutting device 23 to the threshing unit 4.

The threshing unit 4 is provided behind the reaping unit 15. The threshing unit 4 includes a feed chain 18 and a threshing cylinder 19. The feed chain 18 conveys the grain culms conveyed from the conveying device 7 of the reaping unit 15 for threshing, and further conveys the grain culms after threshing, that is, waste straws, to the waste straw processing unit 6. The threshing cylinder 19 threshes the grain culms being conveyed by the feed chain 18.

The sorting unit 5 is provided below the threshing unit 4. The sorting unit 5 includes a swing sorting device 21, a blower sorting device 22, a grain conveying device (not shown), and a straw debris discharging device (not shown). The swing sorting device 21 sifts threshed materials that fall from the threshing unit 4 and sorts the threshed materials into grains, straw debris, and the like. The blower sorting device 22 further sorts the threshed materials sorted by the swing sorting device 21 into grains, straw debris, and the like by blowing air. The grain conveying device conveys the grains sorted by the swing sorting device 21 and the blower sorting device 22 to the storing unit 16. The straw debris discharging device discharges the straw debris and the like sorted by the swing sorting device 21 and the blower sorting device 22 to the outside of the combine harvester 1.

The storing unit 16 is provided on the right side of the threshing unit 4. The storing unit 16 includes a storage tank (grain tank) 24 and a discharging device 25. The storage tank 24 stores the grains conveyed from the sorting unit 5. The discharging device 25 includes an auger or the like, and discharges the grains stored in the storage tank 24 to a carrier vehicle at a predetermined discharging position in the field F.

The waste straw processing unit 6 is provided behind the threshing unit 4. The waste straw processing unit 6 includes a waste straw conveying device (not shown) and a waste straw cutting device (not shown). The waste straw conveying device conveys the waste straws conveyed from the feed chain 18 of the threshing unit 4 to the waste straw cutting device. The waste straw cutting device cuts the waste straws conveyed by the waste straw conveying device and discharges the cut waste straws to the outside of the combine harvester 1. The waste straw processing unit 6 discharges the waste straws of the reaped grain culms to positions of the grain culms to be reaped. As described above, the combine harvester 1 reaps the grain culms and discharges the waste straws B1 to behind the combine harvester 1 while traveling, so that the waste straws B1 are accumulated in a row on the traveling track of the combine harvester 1 (see Fig. 4B and the like).

The power unit 8 is provided above the traveling unit 14 and in front of the storing unit 16. The power unit 8 includes the engine 27 that generates the rotational power. The power unit 8 transmits the rotational power generated by the engine 27 to the traveling unit 14, the reaping unit 15, the storing unit 16, the threshing unit 4, the sorting unit 5, and the waste straw processing unit 6.

The steering unit 9 is provided above the power unit 8. The steering unit 9 includes, around a driver's seat that is a seat on which the operator sits, a steering wheel configured to instruct the combine harvester 1 to turn the machine body thereof, a main shift lever and a sub-shift lever, which are configured to instruct the combine harvester 1 to change forward travel and backward traveling speeds, and the like as operation tools for operating the travel of the combine harvester 1. The manual travel of the combine harvester 1 is performed by the traveling unit 14 that has received operation on the steering wheel, the main shift lever, and the sub-shift lever of the steering unit 9. In addition, the steering unit 9 includes a mechanism for operating the reaping work by the reaping unit 15, the threshing work by the threshing unit 4, the discharging work by the discharging device 25 of the storing unit 16, and the like.

The positioning unit 13 acquires the own vehicle position of the combine harvester 1 using a satellite positioning system such as a GPS. For example, the positioning unit 13 receives a positioning signal from a positioning satellite via a positioning antenna, and acquires position information of the positioning unit 13, that is, the own vehicle position (measurement point data) of the combine harvester 1 based on the positioning signal. The positioning unit 13 may include a quantum compass instead of the positioning antenna.

The communication unit 17 (see Fig. 1) is a communication interface for connecting the combine harvester 1 to the communication network N1 in a wired or wireless manner and executing data communication according to a predetermined communication protocol, with an external device such as the operation terminal 3 via the communication network N1.

The storage unit 12 is a non-volatile storage unit such as an HDD, an SSD, or a flash memory that stores various types of information. The storage unit 12 stores a control program for causing the vehicle control device 11 to execute predetermined processing. For example, the control program is non-temporarily recorded in a computer-readable recording medium such as a flash ROM, an EEPROM, a CD, or a DVD, and is read by a predetermined reading device (not shown) and stored in the storage unit 12. Note that the control program may be downloaded from a server (not shown) to the combine harvester 1 via the communication network N1 and stored in the storage unit 12. In addition, the storage unit 12 also stores various types of setting information acquired from the operation terminal 3.

The vehicle control device 11 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory for various types of processing executed by the CPU. Then, the vehicle control device 11 controls the combine harvester 1 by executing, with the CPU, various control programs stored in advance in the ROM or the storage unit 12.

Specifically, as shown in Fig. 1, the vehicle control device 11 includes various processing units such as a travel processing unit 111, a work processing unit 112, and a registration processing unit 113. Note that, the vehicle control device 11 functions as the various processing units by executing various types of processing according to the control program with the CPU. In addition, some or all of the processing units may include an electronic circuit. Note that the control program may be a program for causing a plurality of processors to function as the processing unit.

The travel processing unit 111 causes the combine harvester 1 to travel along the target route R set for the field F. Specifically, when a manual travel mode is set, the travel processing unit 111 causes the combine harvester 1 to travel in accordance with the manual operation by the operator. For example, in the outermost peripheral area FO of the field F (see Fig. 3), the travel processing unit 111 causes the combine harvester 1 to travel straight along the outermost peripheral route Ra in response to operation to switch between forward travel and backward travel, operation to switch the vehicle speed, and the like performed by the operator. In addition, the travel processing unit 111 causes the combine harvester 1 to autonomously travel along the inner peripheral route Rb (the autonomous travel route) from the start position S to the end position G in the inner peripheral area F1.

The work processing unit 112 changes a position (posture) of the reaping unit 15 based on the position of the combine harvester 1, and causes the reaping unit 15 to execute the reaping work. Specifically, the work processing unit 112 changes (for example, raises and lowers) the position (height) of the reaping unit 15 in stages between the work height and the non-work height. For example, the work processing unit 112 sets the reaping unit 15 to the work height H1 (see Fig. 7C) when the combine harvester 1 reaches a position a predetermined distance before a starting end of the work route, and sets the reaping unit 15 to the non-work height H0 (see Fig. 7A) when the combine harvester 1 passes through a terminal end of the work route. In addition, the work processing unit 112 may set the intermediate height H2 at which the waste straws B1 can be prevented from being entangled when the combine harvester 1 passes through the waste straws B1 (see Fig. 4B).

### [Corner reaping work method in outermost peripheral area FO]

Next, a specific example of the corner reaping work in the outermost peripheral area F0 of the field F and a method for generating a corner reaping route will be described. The combine harvester 1 performs reaping work at the corners of the field F while performing manual travel and autonomous travel in the outermost peripheral area F0 in accordance with the operation of the operator. In addition, the generation processing unit 312 generates a work route (corner reaping route) along which the next travel is to be performed in accordance with the position of the combine harvester 1. Specifically, when stop information of travel or reaping work is acquired while the combine harvester 1 is traveling on a first travel route, the generation processing unit 312 generates a second travel route for travel subsequently to the first travel route based on a predetermined position corresponding to a travel stop position or a work stop position of the combine harvester 1 and a work width of the combine harvester 1.

For example, as shown in Fig. 8A, first, the operator gets on the combine harvester 1 and starts straight travel (manual travel) along an outer peripheral edge (a right side in Fig. 8A) in the work area to be reaped work, and sets the reaping unit 15 to the work height H1 (see Fig. 7C) to start the reaping work. at the time when the combine harvester 1 travels straight a predetermined distance, the operator performs registration operation to register the current position (the point A) of the combine harvester 1 on the operation terminal 3. Thereafter, when the combine harvester 1 travels straight a predetermined distance from the point A, the operator performs registration operation to register the current position (the point B) of the combine harvester 1 on the operation terminal 3. When acquiring the registered points A and B, the generation processing unit 312 generates the straight line (the reference line L0) passing through the points A and B.

When the reference line L0 is generated, the combine harvester 1 is in the state of being capable of autonomously traveling. When the operator makes an autonomous travel start instruction, the combine harvester 1 starts autonomous travel in the straight direction along the reference line L0. For example, when the operator shifts the main shift lever to a forward position, the combine harvester 1 autonomously travels in the forward direction along the reference line L0 at a vehicle speed corresponding to a shift position. As a result, the reaping work along the outer peripheral edge (the right side) (a first stroke) of the work area can be executed. Note that the operator may cause (manually steer) the combine harvester 1 to manually travel to perform reaping work along the outer peripheral edge of the work area (the first stroke).

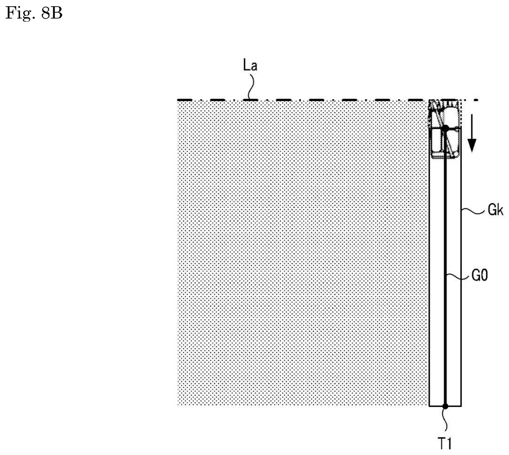

Subsequently, when the combine harvester 1 reaches an outer peripheral end (the upper side in Fig. 8A) of the work area, the operator shifts the main shift lever to a stop position (such as a neutral position) to stop the autonomous travel (stop). In addition, the operator performs operation to raise the reaping unit 15 to the non-work height H0 to stop the reaping work. When the combine harvester 1 stops the autonomous travel and the reaping work, the generation processing unit 312 generates an outline La of the work area based on the stop position of the combine harvester 1 (see Fig. 8B). For example, the generation processing unit 312 sets, as the outline La, a straight line that passes through the stop position of the combine harvester 1, specifically, a distal end position of the combine harvester 1 (a distal end position of the reaping unit 15) and is perpendicular to the reference line L0. As another embodiment, the generation processing unit 312 may set the outline La along the outer shape of the work area based on map information. Note that a specific configuration of a method for generating the outline La will be described in [Third embodiment] below.

In addition, the generation processing unit 312 sets a guide line G0 that serves as a guide line for backward travel based on the stop position of the combine harvester 1 (see Fig. 8B). Specifically, the generation processing unit 312 sets a reference point T1 (see Fig. 8B) at a center of an end of a worked area (reaped area) of a work route of the first run, and sets the guide line G0 passing through the reference point T1. In addition, the generation processing unit 312 sets a travel-scheduled area Gk (rectangular area) corresponding to the work width of the combine harvester 1.

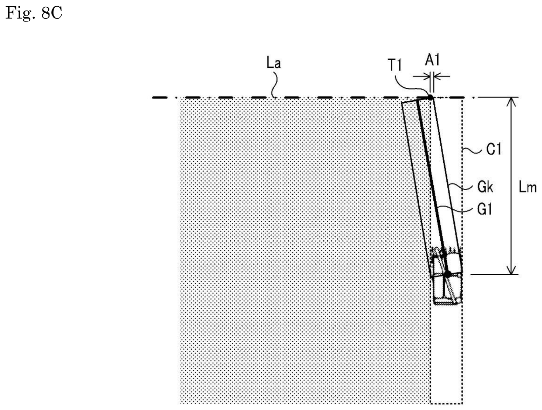

Subsequently, when the operator shifts the main shift lever to the reverse position, the combine harvester 1 starts autonomous travel in the backward direction along the guide line G0. When the combine harvester 1 travels backward by a predetermined distance Lm (for example, 10 m) along the guide line G0 (see Fig. 8C), the generation processing unit 312 sets a guide line G1 of the second run that is inclined by an angle in accordance with a current position of the combine harvester 1 with respect to the reference line L0 (the guide line GO) (see Fig. 8A) and passes through an unworked area (unreaped area) adjacent to the worked area corresponding to the work route of the first run (see Fig. 8C).

Specifically, the generation processing unit 312 sets the reference point T1 at a predetermined position corresponding to the work route of the first run, and sets the guide line G1 based on the reference point T1. For example, as shown in Fig. 8C, when a backward travel distance of the combine harvester 1 that travels backward along the guide line G0 corresponding to the work route of the first run reaches a predetermined distance Lm, the generation processing unit 312 sets, at a position adjacent to a worked area C1 corresponding to the work route of the first run, the travel-scheduled area Gk where travel and work along a work route of the second run are scheduled. Here, since a work direction is set from the right (the outer peripheral side) to the left (the inner peripheral side) and the work route of the second run is generated on the left side of the work route of the first run, as shown in Fig. 8C, the generation processing unit 312 sets the reference point T1 at a left end of a terminal end of the worked area C1 and sets the travel-scheduled area Gk corresponding to the work route of the second run on the left side of the worked area C1.

In addition, the generation processing unit 312 sets the travel-scheduled area Gk such that a part thereof overlaps the reference point T1. Specifically, the generation processing unit 312 sets the travel-scheduled area Gk such that the terminal end of the worked area C1 and a terminal end of the travel-scheduled area Gk overlap each other by a preset width. For example, as shown in Fig. 8C, the generation processing unit 312 sets the travel-scheduled area Gk such that a right end side of the terminal end of the travel-scheduled area Gk overlaps a left end side of the terminal end of the worked area C1 by a width A1. In addition, the generation processing unit 312 sets an upper right end of the travel-scheduled area Gk on the outline La. In addition, the generation processing unit 312 sets a starting end of the travel-scheduled area Gk at a center of the combine harvester 1, and sets the guide line G1 passing through the center and a center of the travel-scheduled area Gk. The guide line G1 is a guide line serving as a guide line for the work route of the second run of the combine harvester 1.

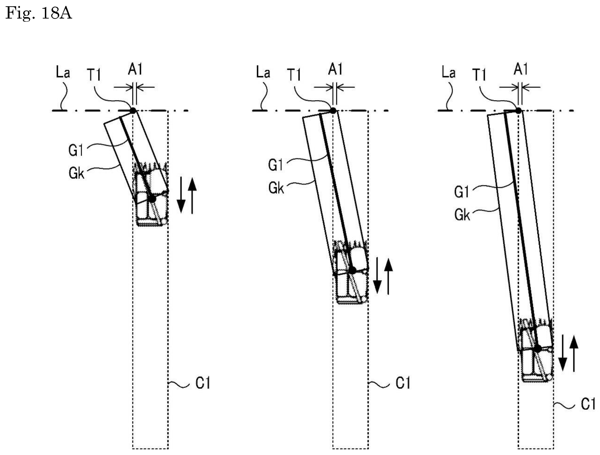

The operation control unit 31 may display the guide line G1 and the travel-scheduled area Gk on the operation terminal 3. While checking the guide line G1 and the travel-scheduled area Gk on the operation terminal 3, the operator causes the combine harvester 1 to manually travel such that the vehicle direction matches a direction of the guide line G1. Note that the generation processing unit 312 rotates the guide line G1 and the travel-scheduled area Gk about the upper right end as a pivot point so as to follow the movement of the combine harvester 1 (see Fig. 18A).

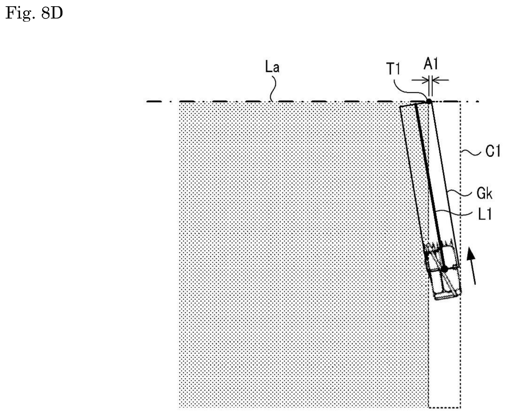

When a difference between the vehicle direction of the combine harvester 1 and the direction of the guide line G1 falls within a predetermined range (see Fig. 8D), the vehicle control device 11 permits the start of autonomous travel, and the generation processing unit 312 determines a position and an angle of the guide line G1 at that time and generates the work route of the second run (an inclined route L1). As described above, the generation processing unit 312 sets the reference point T1 at the left end of a work-completed area corresponding to the work route of the first run (the first travel route), and generates the work route of the second run such that a part of the travel-scheduled area corresponding to the work route of the second run (the second travel route) overlaps the reference point T1. For example, the generation processing unit 312 generates the work route of the second run such that the terminal end of the worked area C1 of the first run and the terminal end of the travel-scheduled area Gk of the second run overlap each other by the preset width A1. In addition, when acquiring the stop information, the generation processing unit 312 sets the reference point T1 at the predetermined position corresponding to the work route of the first run, and generates the work route of the second run based on the reference point T1. In addition, the generation processing unit 312 sets a starting end of the work route of the second run at the rear of the work route of the first run in the traveling direction of the combine harvester 1.

When the operator gives an autonomous travel start instruction on the operation terminal 3, the vehicle control device 11 causes the combine harvester 1 to autonomously travel along the inclined route L1, and causes the reaping unit 15 to descend to the work height H1 and execute reaping work.

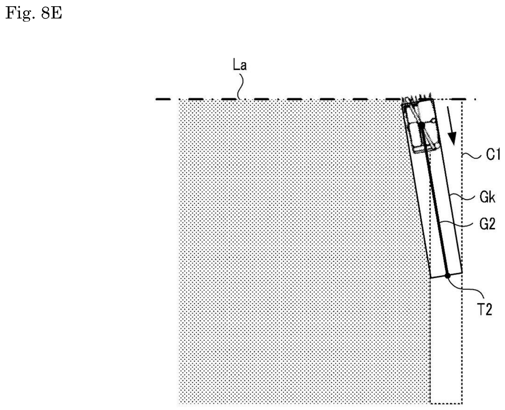

The combine harvester 1 travels along the inclined route L1 and stops the autonomous travel (stops) when reaching the outline La in response to operation of the main shift lever by the operator (see Fig. 8E). In addition, the operator performs operation to raise the reaping unit 15 to the non-work height H0 to stop the reaping work. As a result, the reaping work for the travel-scheduled area Gk corresponding to the inclined route L1 is completed (see Fig. 8D). Note that the combine harvester 1 may emit a buzzer sound when the remaining distance to the outline La is less than a predetermined distance to notify the operator of approach to the outline La. In addition, the combine harvester 1 may automatically stop when reaching the outline La.

Subsequently, the generation processing unit 312 sets a guide line G2 serving as a guide line for backward travel based on a stop position of the combine harvester 1 on the inclined route L1. Specifically, as shown in Fig. 8E, the generation processing unit 312 sets a reference point T2 at a center of an end of a worked area (reaped area) of the work route of the second run (the inclined route L1), and sets the guide line G2 passing through the reference point T2. In addition, the generation processing unit 312 sets the travel-scheduled area Gk corresponding to the work width of the combine harvester 1.

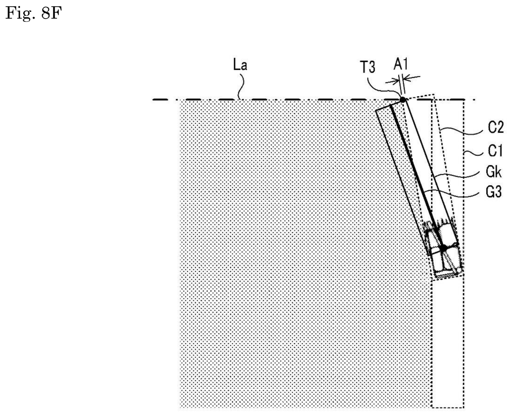

Subsequently, when the operator shifts the main shift lever to the reverse position, the combine harvester 1 starts autonomous travel in the backward direction along the guide line G2. When the combine harvester 1 travels backward by a predetermined distance along the guide line G2, the generation processing unit 312 sets a guide line G3 that is inclined by an angle in accordance with a current position of the combine harvester 1 with respect to the inclined route L1 of the second run (see Fig. 8D) and passes through an unworked area adjacent to the worked area of the second run (see Fig. 8F).

Specifically, as shown in Fig. 8F, the generation processing unit 312 sets, at a position adjacent to a worked area C2 corresponding to the work route of the second run (the inclined route L1), the travel-scheduled area Gk where travel and work along a work route of the third run are scheduled. Here, the generation processing unit 312 sets a reference point T3 at a left end of a terminal end of the worked area C2, and sets the travel-scheduled area Gk corresponding to the work route of the third run on the left side of the worked area C2.

In addition, the generation processing unit 312 sets the travel-scheduled area Gk such that a part thereof overlaps the reference point T3. For example, as shown in Fig. 8F, the generation processing unit 312 sets the travel-scheduled area Gk such that a right end side of the terminal end of the travel-scheduled area Gk overlaps a left end side of the terminal end of the worked area C2 by the width A1. In addition, the generation processing unit 312 sets an upper right end of the travel-scheduled area Gk on the outline La. In addition, the generation processing unit 312 sets a starting end of the travel-scheduled area Gk at a center of the combine harvester 1, and sets the guide line G3 passing through the center and a center of the travel-scheduled area Gk. The guide line G3 is a guide line serving as a guide line for the work route of the third run of the combine harvester 1.

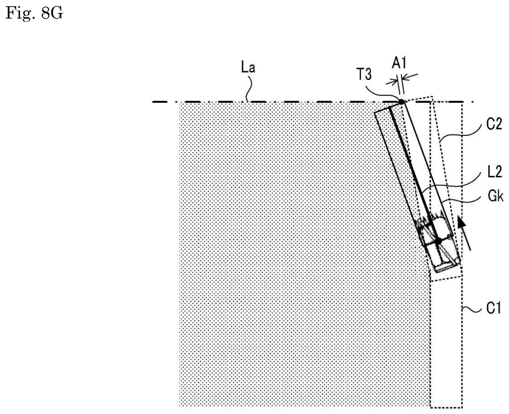

While checking the guide line G3 and the travel-scheduled area Gk on the operation terminal 3, the operator causes the combine harvester 1 to manually travel such that the vehicle direction matches a direction of the guide line G3. When a difference between the vehicle direction of the combine harvester 1 and the direction of the guide line G3 falls within a predetermined range (see Fig. 8G), the vehicle control device 11 permits the start of autonomous travel, and the generation processing unit 312 determines a position and an angle of the guide line G3 at that time and generates the work route of the third run (an inclined route L2). As described above, the generation processing unit 312 generates the work route of the third run such that the terminal end of the worked area C2 of the second run and the terminal end of the travel-scheduled area Gk of the third run overlap each other by the preset width A1.

When the operator gives an autonomous travel start instruction on the operation terminal 3, the vehicle control device 11 causes the combine harvester 1 to autonomously travel along the inclined route L2, and causes the reaping unit 15 to descend to the work height H1 and execute reaping work.

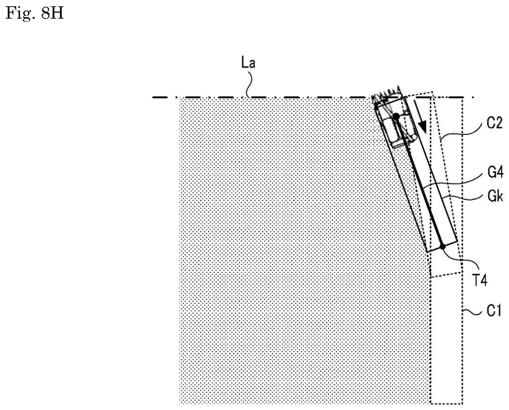

The combine harvester 1 travels along the inclined route L2 and stops the autonomous travel (stops) when reaching the outline La in response to operation of the main shift lever by the operator (see Fig. 8H). Here, in a case where the turning area from the direction X1 to the direction Y1 can be secured at the corner (see Figs. 5A and 5B) of the work area by the first to third runs of reaping work, the generation processing unit 312 ends corner reaping route generation processing and corner reaping work. Note that, in a case where the turning area can be secured by the first and second runs of reaping work, the generation processing unit 312 ends the corner reaping route generation processing and corner reaping work at that time.

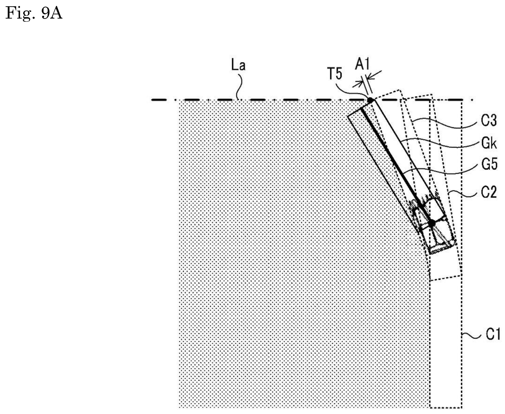

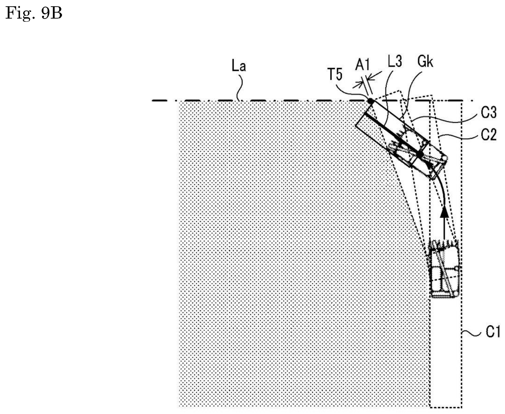

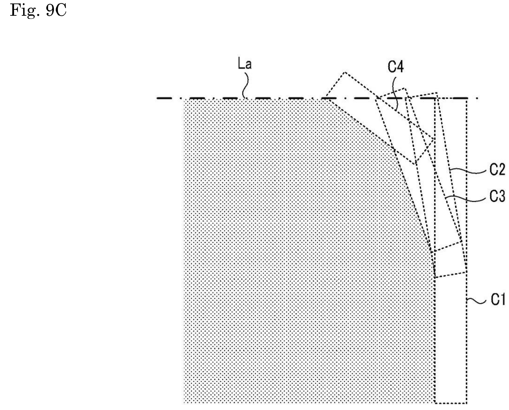

In a case where the turning area cannot be secured by the first to third runs of reaping work, the generation processing unit 312 further performs corner reaping route generation processing and corner reaping work for the fourth run. Specifically, as shown in Fig. 9A, the generation processing unit 312 sets a reference point T5 at a left end of a terminal end of a worked area C3, and sets a guide line G5 (see Fig. 9A) inclined by a predetermined angle with respect to the inclined route L2 of the third run (see Fig. 8G). As shown in Fig. 9B, when the operator aligns the combine harvester 1 by manual travel such that the vehicle direction matches the direction of the guide line G3 and permits the start of autonomous travel, the generation processing unit 312 generates a work route of the fourth run (an inclined route L3). The vehicle control device 11 causes the combine harvester 1 to autonomously travel along the inclined route L3, and causes the reaping unit 15 to descend to the work height H1 and execute reaping work. As a result, as shown in Fig. 9C, the turning area including the worked areas C1 to C4 is formed at the corner of the work area. Note that the number of corner reaping routes (inclined routes) is not limited, and the generation processing unit 312 repeats corner reaping route generation processing and corner reaping work until the turning area of the combine harvester 1 can be secured.

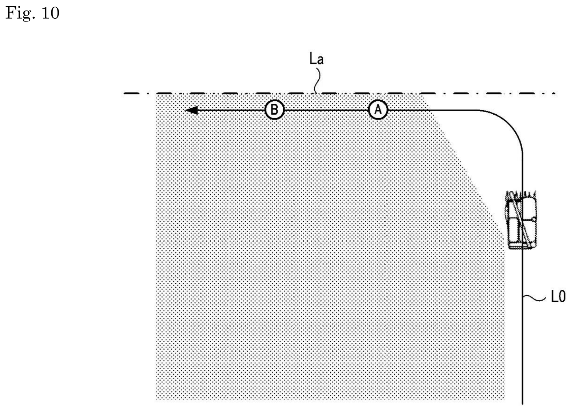

When the turning area necessary for turning when the combine harvester 1 moves to the next work route is secured at the corner (upper right corner) of the work area by the corner reaping work, the operator ends the corner reaping work in the work area and causes the combine harvester 1 to move to the next work route. For example, when the operator shifts the main shift lever to the reverse position, the combine harvester 1 starts autonomous travel in the backward direction and stops at a predetermined position such as on the reference line L0. Thereafter, the operator shifts the main shift lever to the forward position, causes the combine harvester 1 to turn in the worked area and move to the next work route by manual steering (see Fig. 10).

When the combine harvester 1 enters the next work route, the operator starts straight travel (manual travel) along an outer peripheral edge (the upper side in Fig. 10) of the work area and starts reaping work, and performs registration operation to register points A and B on the operation terminal 3. As a result, the reference line L0 corresponding to the next work route is generated. Thereafter, the combine harvester 1 performs the corner reaping work at a corner (upper left corner) of the work area in accordance with the above-described procedure in accordance with the operation of the operator. Similarly, the combine harvester 1 performs the corner reaping work at the lower left corner and the lower right corner of the work area in accordance with the operation of the operator.

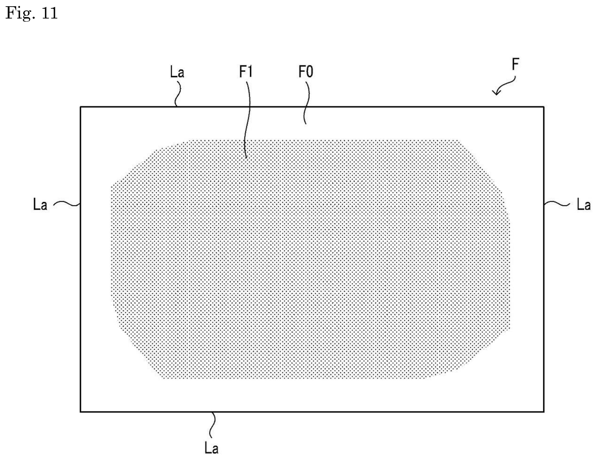

When the corner reaping work at each corner of the work area is completed, the setting processing unit 311 specifies a shape surrounded by the outline La and registers an area surrounded by the outline La as the field F (see Fig. 11). In the field F, the outermost peripheral area F0 is the worked area in which the reaping work has finished, and the inner peripheral area F1 is an unworked area in which reaping work has not finished. Note that a method for registering the field F is not limited thereto, and the setting processing unit 311 may apply, for example, a known technique (see JP-A-2022-87959 and JP-A-2023-56476) of approximating the own vehicle position of the combine harvester 1 (measurement point data or a positioning point) to a straight line and registering an area surrounded by the approximate straight line as the field F.

As described above, the travel system 10 generates the corner reaping route in the outermost peripheral area F0 and executes the corner reaping work. Note that the corner reaping work in the outermost peripheral area F0 in a state in which the field F is not registered has been described in the above-described embodiment. In a case where the field F is registered, generation processing of the outline La is omitted. In this case, it is sufficient for the operator to cause the combine harvester 1 to autonomously travel in accordance with the outer peripheral edges (the right side, the upper side, a left side, and a lower side) of the field F and stop the autonomous travel.

In addition, in the above configuration, the generation processing unit 312 may set an inclination angle of each inclined route such that the vehicle body (for example, the rear end) of the combine harvester 1 does not protrude out of the work area by the turning operation when the combine harvester 1 moves to the next inclined route. In addition, the maximum value (maximum inclination angle) of the inclination angle may be set in advance. In this case, for example, the generation processing unit 312 may first draw an inclined straight line at the maximum inclination angle, reduce the inclination angle when the vehicle body protrudes out of the work area, and set, as the inclined route, the inclined straight line having the maximum angle at which the vehicle body does not protrude out of the work area. As described above, the generation processing unit 312 determines the inclination angle of the inclined route such that the rear end of the vehicle body does not protrude out of the work area.

In addition, a corner reaping work method in the outermost peripheral area F0 is not limited to the above method. As another embodiment, the combine harvester 1 may perform reaping work while autonomously traveling in the outermost peripheral area F0 without intervention of the manual operation by the operator. That is, the generation processing unit 312 may generate the work route of the second run (the inclined route L1) after the combine harvester 1 autonomously travels along the work route of the first run, and may generate the work route of the third run (the inclined route L2) after the combine harvester 1 autonomously travels along the work route of the second run. In addition, the setting processing unit 311 may specify a shape of the worked area based on position information of the combine harvester 1 acquired during the manual travel, and register the field F.

As another embodiment, in a case where the shape of the field F is already registered, the combine harvester 1 may autonomously travel along a route parallel to the outline sides of the field F.

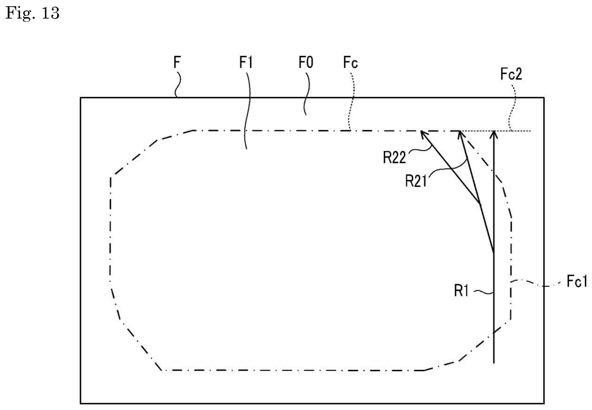

When the reaping work in the outermost peripheral area F0 (the first round) has finished, the combine harvester 1 performs reaping work for the second round (the inner peripheral area F1). In the second round, similarly to the outermost peripheral area F0, the combine harvester 1 performs the reaping work based on a work route along the outer periphery (outline sides) of the field F and a corner reaping route of each corner. Fig. 13 shows a work route R1 and inclined routes R21 and R22 of the second round. In Fig. 13, reference sign "Fc" indicates a boundary between a worked area and an unworked area, that is, an outermost peripheral position of the unworked area or an outermost peripheral position of the worked area. The outermost peripheral position Fc is specified by executing the travel and work in the outermost peripheral area F0.

Specifically, the generation processing unit 312 generates the work route R1 inward by one stroke (the work width) based on an outermost peripheral position Fc1 or an outer edge portion (a right side) of the field F. In addition, the generation processing unit 312 generates the work route R1 having a terminal end on an extension line Fc2 of the outermost peripheral position Fc.

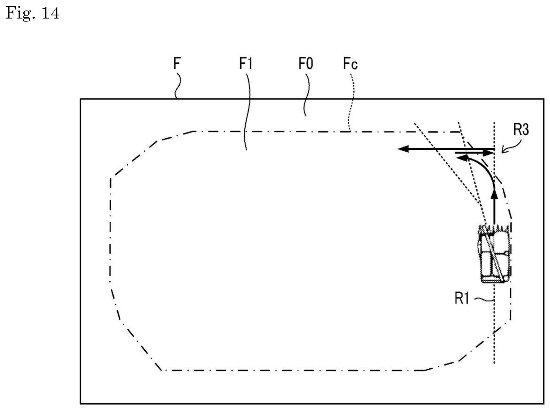

In addition, the generation processing unit 312 generates the inclined routes R21 and R22 each having a predetermined inclination angle based on the reference points T1 and T3 shown in Figs. 8C to 8H. The vehicle control device 11 causes the combine harvester 1 to execute the reaping work while autonomously traveling along the inclined routes R21 and R22. In addition, when a turning area is secured by corner reaping work of the corner, the generation processing unit 312 generates a movement route R3 at the corner and changes a direction of the combine harvester 1 toward the next work route as shown in Fig. 14.

Note that the vehicle control device 11 may cause the combine harvester 1 to autonomously travel from the second round. In this case, as shown in Fig. 15, the vehicle control device 11 causes the combine harvester 1 to execute reaping work while autonomously traveling from the start position S to the end position G along the work route, the corner reaping route, and the movement route in the inner peripheral area F1. As the combine harvester 1 moves toward the inner peripheral side, the worked area on the outer peripheral side becomes wider, and the turning area becomes wider, so that the corner reaping work becomes unnecessary.

As described above, the generation processing unit 312 generates the corner reaping route and the movement route R3 in each corner of the field F. In addition, in a case where a turning area of the combine harvester 1 is not secured at any corner by the corner reaping route corresponding to circling for the first round, the generation processing unit 312 generates a corner reaping route corresponding to circling for the second round. The generation processing unit 312 generates corner reaping routes for a plurality of rounds until the turning areas are secured at the corners. In addition, the generation processing unit 312 may determine whether or not it is necessary to generate a corner reaping route corresponding to circling for the second round at the time when circling for the first round has been executed, or may determine any number of rounds for which corner reaping routes need to be generated before the autonomous travel on the inner peripheral route Rb is started.

When the turning areas are secured at the respective corners of the field F by the corner reaping routes, the generation processing unit 312 generates a work route (see Fig. 15) including no corner reaping route inside.

As another embodiment, the generation processing unit 312 may generate work routes for performing reaping work (parallel reaping) with parallel travel at the corner. For example, as shown in Fig. 16, the generation processing unit 312 generates the first inclined route R21 and the second inclined route R22 partially parallel to the work route R1. Specifically, the generation processing unit 312 generates the first inclined route R21 including an inclined route R21a, which has a predetermined inclination angle with respect to the work route R1 and passes through the intersection point P1, and a parallel route R21b connected to the inclined route R21a and parallel to the work route R1. In addition, the generation processing unit 312 generates the second inclined route R22 including an inclined route R22a, which has a predetermined inclination angle with respect to the work route R1 and passes through the intersection point P2 between the inclined route R21a and the parallel route R21b, and a parallel route R22b connected to the inclined route R22a and parallel to the work route R1. According to the configuration in which the corners are worked by the parallel reaping, a distance for a turning area (for example, a distance up to the parallel route R22b) can be provided, so that corner reaping work for the subsequent rounds can be easily omitted.

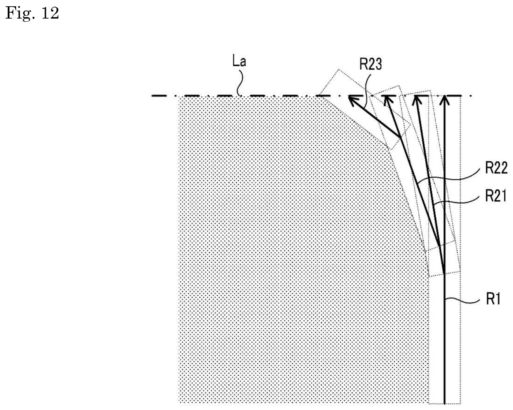

As described above, in the present invention, the entire first inclined route R21 may be inclined with respect to the work route R1 (see Fig. 12), or a part thereof may be inclined with respect to the work route R1 (see Fig. 16). Similarly, the entire second inclined route R22 may be inclined with respect to the work route R1 (see Fig. 12), or a part thereof may be inclined with respect to the work route R1 (see Fig. 16). In the configuration shown in Fig. 16, the generation processing unit 312 generates the inclined route R22a having the same inclination angle as the inclination angle of the inclined route R21a inside the first inclined route R21.

### [Route generation processing of first embodiment]

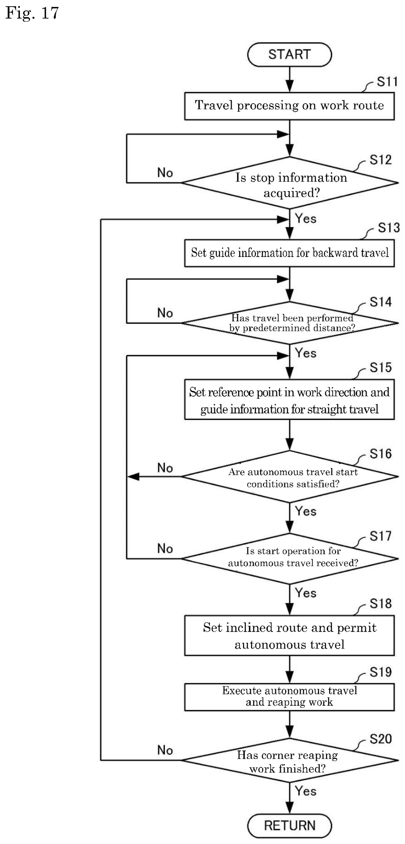

Hereinafter, an example of corner reaping route generation processing (route generation processing) executed by the travel system 10 according to the first embodiment will be described with reference to Fig. 17.

Note that the present invention can be regarded as an invention of a route generation method for executing one or a plurality of steps included in the route generation processing. In addition, one or a plurality of steps included in the route generation processing described here may be appropriately omitted. In addition, an execution order of each step in the route generation processing may be different within a range in which similar operational effects are produced. Furthermore, here, a case where the vehicle control device 11 and the operation control unit 31 execute each step in the route generation processing will be described as an example, but a route generation method in which one or a plurality of processors execute each step in the route generation processing in a dispersed manner is also considered as another embodiment.

Here, a method for generating a corner reaping route when the combine harvester 1 performs reaping work in the outermost peripheral area F0 (the first round) will be described with reference to the examples shown in Figs. 8A to 9C. Note that the method for generating the corner reaping route is the same for the second and subsequent rounds inside the outermost peripheral area F0 (the first round).

### <Step S11>

In step S11, the vehicle control device 11 executes travel processing on a work route in the outermost peripheral area F0 of a work area (the field F). For example, as shown in Fig. 8A, the operator gets on the combine harvester 1, starts straight travel (manual travel) along an outer peripheral edge (the right side in Fig. 8A) in the work area, and starts the reaping work. In addition, the operator performs registration operation to register points A and B on the operation terminal 3. The operation control unit 31 generates the reference line L0 passing through the points A and B. As a result, the vehicle control device 11 causes the combine harvester 1 to perform the reaping work while autonomously traveling along the reference line L0.

### <Step S12>

In step S12, the operation control unit 31 determines whether or not stop information of travel or work has been acquired while the combine harvester 1 is traveling on the work route. Specifically, the operation control unit 31 determines whether or not the combine harvester 1 has ended autonomous travel on the work route or whether or not reaping work on the work route has finished. For example, when receiving operation to raise the reaping unit 15 from the work height H1 to the non-work height H0 from the operator, the operation control unit 31 determines that information on the operation (an example of the stop information) has been acquired (the reaping work has finished).

As another embodiment, for example, when receiving operation to stop the travel of the combine harvester 1 from the operator, the operation control unit 31 may determine that information on the operation (an example of the stop information) has been acquired (the autonomous travel has ended).

In addition, for example, when receiving operation to disengage a clutch of the reaping unit 15 from the operator, the operation control unit 31 may determine that information on the operation (an example of the stop information) has been acquired (the reaping work has finished).

In addition, for example, when detection information obtained by detecting that the reaping unit 15 has risen is acquired from the combine harvester 1, the operation control unit 31 may determine that information on such operation (an example of the stop information) has been acquired (the reaping work has finished).

In addition, for example, when detection information obtained by detecting that travel has stopped is acquired from the combine harvester 1, the operation control unit 31 may determine that information on such operation (an example of the stop information) has been acquired (the autonomous travel has ended).

In addition, for example, when acquiring detection information obtained by detecting the disengagement of the clutch of the reaping unit 15 from the combine harvester 1, the operation control unit 31 may determine that information on such operation (an example of the stop information) has been acquired (the reaping work has finished).

When the operation control unit 31 determines that the stop information is acquired (S12: Yes), the processing proceeds to step S13. The operation control unit 31 waits until the stop information is acquired (S12: No).

### <Step S13>

In step S13, the operation control unit 31 sets guide information for backward travel. Specifically, the operation control unit 31 sets the guide line G0 as the guide line for backward travel and the travel-scheduled area Gk corresponding to the work width of the combine harvester 1 based on the stop position of the combine harvester 1 and the work width of the combine harvester 1. For example, as shown in Fig. 8B, the operation control unit 31 sets the reference point T1 at the center of the end of the worked area of the work route, and sets the guide line G0 passing through the reference point T1 and the travel-scheduled area Gk surrounding the guide line G0. Note that the process of setting the guide information for backward travel may be omitted in the route generation processing of the present invention.

### <Step S14>

In step S14, the operation control unit 31 determines whether or not the combine harvester 1 has traveled backward by the predetermined distance Lm. Specifically, when the operator shifts the main shift lever to the reverse position at the stop position, the combine harvester 1 starts autonomous travel in the backward direction along the guide line G0. When the combine harvester 1 travels backward by the predetermined distance Lm (for example, 10 m) along the guide line G0 (S14: Yes), the operation control unit 31 causes the processing to proceed to step S15. The vehicle control device 11 continues the backward autonomous travel processing until the backward travel distance of the combine harvester 1 reaches the predetermined distance Lm (see Fig. 8C), and the operation control unit 31 waits until the backward travel distance reaches the predetermined distance Lm (S14: No).

Note that the predetermined distance Lm is set in accordance with the overall length and the work width of the combine harvester 1. For example, the predetermined distance Lm is set to twice the overall length of the combine harvester 1. In addition, the predetermined distance Lm is set to a longer distance as the overall length of the combine harvester 1 is longer or as the work width is wider. In addition, a minimum distance (lower limit distance) may be set for the predetermined distance Lm. In addition, the predetermined distance Lm may be settable by the operator within a range of the lower limit distance or more. In addition, the predetermined distance Lm may be set based on an overlapping width (a lap amount) between the individual work areas of the adjacent travel routes. In addition, the predetermined distance Lm may be set based on at least one of the overall length of the combine harvester 1, the work width of the reaping unit 15, left and right end positions of the divider 28, and the lap amount.

In addition, in a route along which the combine harvester 1 bends to the left when entering a second travel route (an inclined route) subsequent to a first travel route, if the combine harvester 1 greatly bends while reaping grain culms, the left end of the divider 28 pushes down the grain culms, and a cutting blade passes therethrough, so that the grain culms cannot be properly reaped or a swath becomes poor. Therefore, the operation control unit 31 may display (or set) the second travel route when an angle between the first travel route and the second travel route is smaller than a maximum angle (or the predetermined distance Lm at which the maximum angle is realized) at which the above influence is allowable. The maximum angle may be an angle obtained by a test, or may be a fixed angle obtained from results of manual work by a plurality of operators. In addition, the maximum angle (or the predetermined distance Lm) may be a preset fixed value, or may be set (changed) in accordance with the state of grain culms. The maximum angle may be reduced as the degree of lodging of grain culms is greater, for example, by setting the maximum angle to a smaller angle when grain culms are lodged. As described above, the angle between the first travel route and the second travel route may be set based on a feature size of the reaping unit 15 or may be set based on an angle allowable depending on a crop swath.

### <Step S15>

In step S15, the operation control unit 31 sets the reference point T1 at a predetermined position corresponding to a work route, and sets guide information for straight travel based on the reference point T1. Specifically, the operation control unit 31 sets the reference point T1 at a left end of a terminal end of the worked area C1 (an individual work area) of the work route, and sets the guide line G1 as a guide line for forward travel and the travel-scheduled area Gk corresponding to the work width of the combine harvester 1 based on a stop position of the combine harvester 1 and the work width of the combine harvester 1. For example, as shown in Fig. 8C, the operation control unit 31 sets the travel-scheduled area Gk (an individual work area) such that the upper right end side of the travel-scheduled area Gk corresponding to the work route of the second run overlaps an area having the width A1 (for example, 20 cm) from the reference point T1 of the worked area C1. In addition, the operation control unit 31 sets the guide line G1 passing through a current position of the combine harvester 1 and passing through a center of the travel-scheduled area Gk (see Fig. 8C). The operation control unit 31 displays the guide line G1 and the travel-scheduled area Gk on the operation terminal 3. Note that the operation control unit 31 may display only the guide line G1 on the operation terminal 3 and omit the display of the travel-scheduled area Gk. The same applies to the subsequent guide lines and the subsequent travel-scheduled areas Gk.

Here, the operation control unit 31 sets the guide line G1 and the travel-scheduled area Gk based on the current position of the combine harvester 1 when the backward travel distance of the combine harvester 1 is the predetermined distance Lm or more. As another embodiment, the operation control unit 31 may set the guide line G1 and the travel-scheduled area Gk when the combine harvester 1 stops or when the combine harvester 1 starts backward travel. For example, as shown in Fig. 18A, the operation control unit 31 changes an inclination angle and a length of the guide line G1 and the travel-scheduled area Gk following the movement (forward or backward travel, turning, or the like) of the combine harvester 1 with the upper right end set inward by the width A1 from the reference point T1 as a pivot point. Note that how the inclination angle and the length of the guide line G1 and the travel-scheduled area Gk are changed following the movement of the combine harvester 1 may be displayed on the operation terminal 3.

### <Step S16>

In step S16, the vehicle control device 11 determines whether or not the combine harvester 1 satisfies the autonomous travel start conditions. For example, when a position deviation between the current position of the combine harvester 1 and a starting end of the guide line G1 is within a predetermined distance and a direction difference between the vehicle direction of the combine harvester 1 and the direction of the guide line G1 is within a predetermined angle, the vehicle control device 11 determines that the autonomous travel start conditions are satisfied. The operator aligns the combine harvester 1 by manual travel so as to satisfy the autonomous travel start conditions while checking the guide line G1 and the travel-scheduled area Gk displayed on the operation terminal 3. For example, the operator causes the combine harvester 1 to gradually turn such that the vehicle direction is directed in (directly faces) the direction of the guide line G1 such that the rear end of the combine harvester 1 does not protrude out of the work area (see Fig. 8D). As another embodiment, the vehicle control device 11 may align the combine harvester 1 by autonomous travel. When the combine harvester 1 satisfies the autonomous travel start conditions (S16: Yes), the vehicle control device 11 causes the processing to proceed to step S17. On the other hand, when the combine harvester 1 does not satisfy the autonomous travel start conditions (S16: No), the vehicle control device 11 returns the processing to step S15.

### <Step S17>

In step S17, the operation control unit 31 determines whether or not start operation for the autonomous travel has been received from the operator. For example, when the operator presses a start button (see Fig. 6A) on the operation screen of the operation terminal 3, the operation control unit 31 receives the start operation. When the start operation is received (S17: Yes), the operation control unit 31 causes the processing to proceed to step S18. On the other hand, when the start operation is not received (S17: No), the operation control unit 31 returns the processing to step S15.

As described above, the operation control unit 31 changes the direction of the guide line G1 following the movement of the combine harvester 1 until the autonomous travel start conditions are satisfied and the operator performs the start operation for the autonomous travel (step S15).

### <Step S18>

In step S18, the operation control unit 31 sets an inclined route, and the vehicle control device 11 permits the autonomous travel. Specifically, the operation control unit 31 sets, as the inclined route L1, the guide line G1 of the direction at the time when the autonomous travel start conditions are satisfied and the operator performs the start operation for the autonomous travel (at the time when the start button is pressed) (see Fig. 8D). In addition, the vehicle control device 11 permits the autonomous travel. When the autonomous travel is permitted, the operation control unit 31 may notify the operator that the autonomous travel is possible by voice, screen display, or the like.

### <Step S19>

In step S19, the vehicle control device 11 causes the combine harvester 1 to execute reaping work while autonomously traveling. Specifically, the vehicle control device 11 causes the combine harvester 1 to execute the reaping work in an unworked area while autonomously traveling along the inclined route L1.

### <Step S20>

In step S20, the operation control unit 31 determines whether or not the corner reaping work has finished. For example, when the operator presses an end button (not shown) on the operation screen, the operation control unit 31 determines that the corner reaping work has finished. As another embodiment, the operation control unit 31 may determine whether or not a turning area necessary for turning when the combine harvester 1 moves to the next work route is secured at the corner, determine that the corner reaping work has finished when the turning area is secured, and determine that the corner reaping work has not finished when the turning area is not secured.

When the corner reaping work has not finished (S20: No), the operation control unit 31 causes the processing to proceed to step S13 and acquires the guide information for backward travel.

For example, when the combine harvester 1 travels along the inclined route L1, reaches the outline La, and stops the autonomous travel, the operation control unit 31 sets the reference point T2 at the center of the end of the worked area (see Fig. 8E), sets the guide line G2 passing through the reference point T2, and sets the travel-scheduled area Gk corresponding to the work width of the combine harvester 1 (step S13). Thereafter, the vehicle control device 11 causes the combine harvester 1 to autonomously travel backward by a predetermined distance along the guide line G1 (see Figs. 8E and 8F). When the combine harvester 1 travels backward by the predetermined distance or more along the guide line G2 (S14: Yes), the operation control unit 31 sets the guide line G3 (see Fig. 8F) that passes through an unworked area adjacent to the worked area of the second run and is inclined by a predetermined angle with respect to the inclined route L1 (see Fig. 8D) of the second run (step S15). Thereafter, when the autonomous travel start conditions are satisfied, the inclined route L2 is generated, and the start operation for the autonomous travel is received (steps S16 to S18), the vehicle control device 11 causes the combine harvester 1 to autonomously travel along the inclined route L2 and executes reaping work on the unworked area (step S19).

The operation control unit 31 and the vehicle control device 11 repeatedly execute the processing from steps S13 to S19 until the corner reaping work finishes. When the corner reaping work has finished (S20: Yes), the vehicle control device 11 causes the processing to proceed to step S11 and executes travel processing on the next work route. Specifically, the vehicle control device 11 executes the travel processing on the work route in the direction Y1 (see Figs. 5B and 10). The operation control unit 31 and the vehicle control device 11 execute the above processing for each side and each corner of the outermost peripheral area F0. In addition, the operation control unit 31 and the vehicle control device 11 similarly execute the above processing for each side and each corner in the inner peripheral area F1. The operation control unit 31 and the vehicle control device 11 repeatedly execute the above processing until the corner reaping route of the corner becomes unnecessary.

As described above, the travel system 10 according to the present embodiment generates the travel route for the combine harvester 1 to perform the reaping work in the work area. Specifically, when the stop information of travel or work is acquired while the combine harvester 1 is traveling on the first travel route, the travel system 10 generates the second travel route for travel subsequently to the first travel route based on the predetermined position corresponding to the travel stop position or the work stop position of the combine harvester 1 and the work width of the combine harvester 1. Specifically, when acquiring the stop information, the travel system 10 sets the reference point at the predetermined position corresponding to the first travel route, and generates the second travel route based on the reference point. For example, the travel system 10 sets the reference point at the left end or the right end of the work-completed area (worked area) corresponding to the first travel route, and generates the second travel route such that a part of the work-scheduled area corresponding to the second travel route overlaps the reference point. In addition, the travel system 10 generates the second travel route such that the terminal end of the work-completed area corresponding to the first travel route and the terminal end of the work-scheduled area corresponding to the second travel route overlap each other by the preset width A1.

For example, in a case where the work direction is set from the right side to the left side, as shown in Fig. 18A, the generation processing unit 312 sets the reference point T1 at the upper left end (an example of the predetermined position) of the first travel route, and sets the upper right end of the travel-scheduled area Gk corresponding to the second travel route at a position on the right side of the reference point T1. In addition, the generation processing unit 312 rotates the travel-scheduled area Gk and the guide line G1 about the upper right end of the travel-scheduled area Gk as the pivot point in accordance with the current position of the combine harvester 1. Then, the generation processing unit 312 sets the guide line G1 at the position satisfying the autonomous travel start conditions as the second travel route.

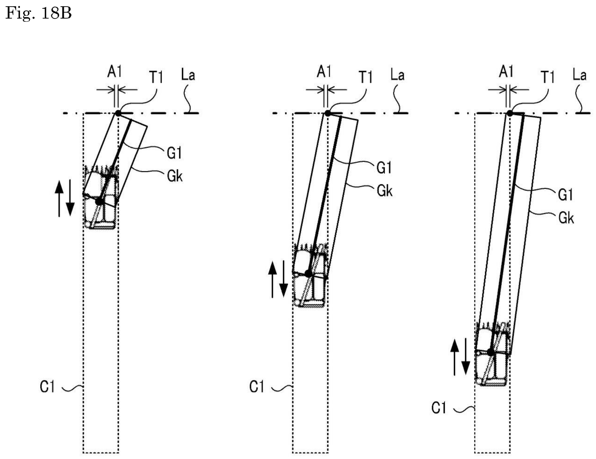

For example, in a case where the work direction is set from the left side to the right side, as shown in Fig. 18B, the generation processing unit 312 sets the reference point T1 at the upper right end (an example of the predetermined position) of the first travel route, and sets the upper left end of the travel-scheduled area Gk corresponding to the second travel route at a position on the left side of the reference point T1. In this case, the generation processing unit 312 rotates the travel-scheduled area Gk and the guide line G1 about the upper left end of the travel-scheduled area Gk as the pivot point in accordance with the current position of the combine harvester 1.

In addition, the generation processing unit 312 may set the reference point T1 at the upper right end or the upper left end of the first travel route in accordance with the direction of the combine harvester 1. For example, when the combine harvester 1 travels on the first travel route and then is directed to the left side of the first travel route, the reference point T1 is set at the upper left end of the first travel route, and the upper right end of the travel-scheduled area Gk corresponding to the second travel route is set at a position on the right side of the reference point T1 (see Fig. 18A). On the other hand, for example, when the combine harvester 1 travels on the first travel route and then is directed to the right side of the first travel route, the reference point T1 is set at the upper right end of the first travel route, and the upper left end of the travel-scheduled area Gk corresponding to the second travel route is set at a position on the left side of the reference point T1 (see Fig. 18B).

According to the above configuration, the next second travel route can be generated based on the position (worked area) where the combine harvester 1 has actually performed the reaping work on the first travel route. In addition, the second travel route can be appropriately generated from a start position of the second travel route set in accordance with the position of the combine harvester 1. For example, an inclined route inclined with respect to the first travel route can be set as the second travel route (see Fig. 12), or a route parallel to the first travel route can be set as the second travel route (see Fig. 16). As described above, the travel route (the corner reaping route) desired by the operator can be easily generated so that workability and operability of the operator can be improved. In addition, the travel route corresponding to the work status can be generated so that work accuracy of reaping work can be improved. In addition, it is possible to secure the turning area necessary for turning when the combine harvester 1 moves to the next work route by setting the second travel route (the corner reaping route) for each corner of the field. That is, the second travel route is a route for traveling at each corner of the field F.

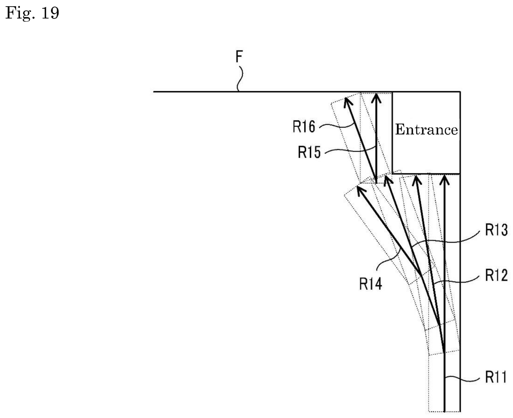

According to the above configuration, for example, as shown in Fig. 19, even in a case where there is an unworked area, such as an entrance, in the field F, a work route (an inclined route or the like) can be appropriately generated in accordance with a state of the field F by generating a next work route R12 based on a work route R11, generating a next work route R13 based on the work route R12, generating a next work route R14 based on the work route R13, and generating a next work route R16 based on a work route R15.

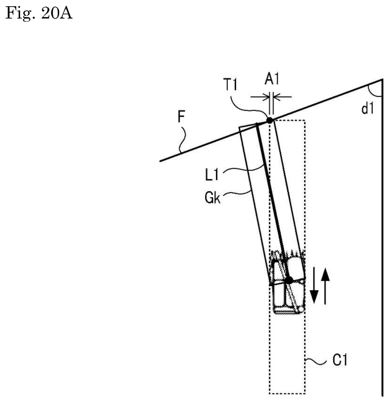

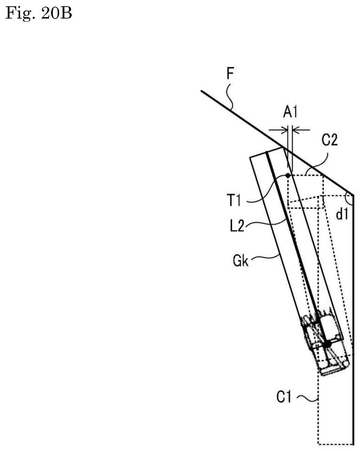

In addition, as shown in Fig. 20A, even in a case where a shape of the field F is inclined and an inclination angle d1 is an acute angle, the inclined route L1 (the second travel route) can be appropriately generated by the above configuration. In addition, as shown in Fig. 20B, even in a case where the inclination angle d1 is an obtuse angle, the inclined route L1 (the second travel route) can be similarly generated. Note that, in the example shown in Fig. 20B, the generation processing unit 312 sets the reference point T1 at an upper left end of the worked area C2, and generates the inclined route L2 such that a right side (right end) of the travel-scheduled area Gk overlaps a position corresponding to the width A1. As described above, the generation processing unit 312 sets terminal ends of the travel-scheduled area Gk and the second travel route in accordance with the shape of the field F.

In the above-described embodiment, the generation processing unit 312 generates the second travel route when the combine harvester 1 travels backward by a predetermined distance or more along the first travel route after traveling on the first travel route and then traveled. As another embodiment, the generation processing unit 312 may generate the second travel route when the combine harvester 1 travels backward along the first travel route after traveling on the first travel route and an angle between the first travel route and a guide line (for example, the guide line G1 in Figs. 18A and 18B) becomes a predetermined angle or more. That is, in the present invention, the generation processing unit 312 generates the second travel route when a predetermined condition is satisfied after the combine harvester 1 has traveled on the first travel route (for example, when the backward travel distance of the combine harvester 1 is the predetermined distance or more, or when the angle between the first travel route and the guide line is the predetermined angle or more). In addition, the predetermined distance and the predetermined angle are set based on at least one of the overall length of the combine harvester 1, the work width of the reaping unit 15, the left and right end positions of the divider 28, and the lap amount. As described above, the predetermined angle may be set based on the feature size of the reaping unit 15 or may be set based on the angle (maximum angle) allowable depending on a crop swath.

### [Second embodiment]

The travel system 10 according to a second embodiment has a configuration to start autonomous travel and reaping work from the inner peripheral area F1 in the field F. Specifically, the travel system 10 according to the first embodiment is configured to first perform the reaping work in the outermost peripheral area F0 (the first round), and then perform the reaping work in the inner peripheral area F1.

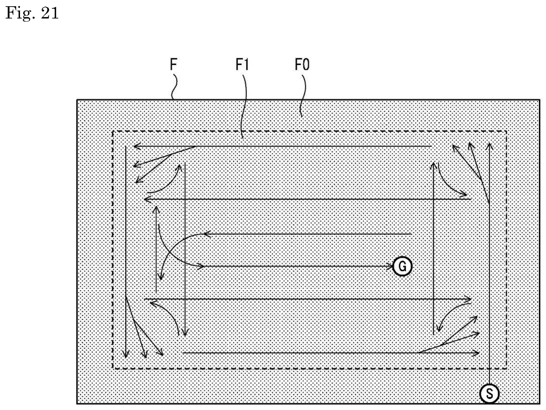

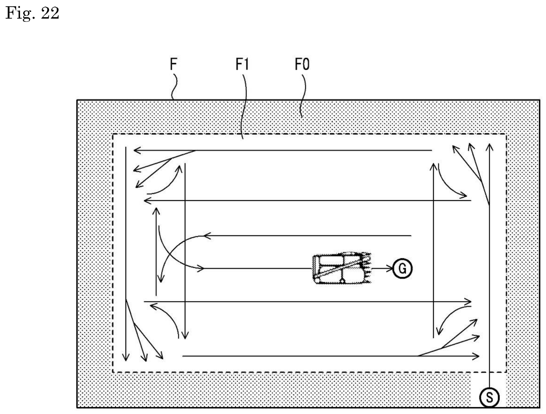

On the other hand, the travel system 10 according to the second embodiment skips the reaping work in the outermost peripheral area F0 and starts the reaping work from the second round (the inner side by one stroke). Specifically, as shown in Fig. 21, the travel system 10 sets the start position S of the autonomous travel on the inner side (the inner peripheral area F1) of the outermost peripheral area F0, and performs the reaping work by the autonomous travel from the start position S to the end position G in the inner peripheral area F1. Then, when the reaping work in the inner peripheral area F1 has finished (see Fig. 22), the travel system 10 switches to a manual travel mode and performs reaping work for one stroke by manual travel by an operator in the outermost peripheral area F0. Hereinafter, a specific configuration of the second embodiment will be described. Hereinafter, description of the same configuration as the configuration described in the first embodiment will be omitted.

The generation processing unit 312 generates an autonomous travel route on which the combine harvester 1 is caused to autonomously travel with respect to the entire inner peripheral area F1 (an inner peripheral work area of the present invention) excluding the outermost peripheral area F0 (an outermost peripheral work area of the present invention) of the field F. Specifically, the generation processing unit 312 generates a travel route (a first travel route) on which the combine harvester 1 is caused to travel first out of the autonomous travel route based on position information of the outermost peripheral area F0. In addition, the generation processing unit 312 sets the start position S of the autonomous travel route based on the position information of the outermost peripheral area F0. That is, the generation processing unit 312 generates the autonomous travel route directed from the outer side to the inner side in the inner peripheral area F1.

For example, the generation processing unit 312 specifies a position of the outermost peripheral area F0 based on an outer shape of the field F, and sets the start position S of the autonomous travel route based on the position information of the outermost peripheral area F0 and a work width of the combine harvester 1. Here, for example, in a case where field information such as the outer shape of the field F is not registered, the generation processing unit 312 specifies the outer shape of the field F using map information, image information of an aerial photograph, and the like. In addition, for example, in a case where the field information is registered based on a past travel history of the field F, the generation processing unit 312 specifies the outer shape of the field F from the field information.

When specifying the outer shape of the field F, the generation processing unit 312 specifies a position of an area (the outermost peripheral area F0) for one stroke corresponding to a work width WO of the combine harvester 1 from each outline side. The generation processing unit 312 sets the start position S in an area (the inner peripheral area F1) inside the outermost peripheral area F0 based on the position information of the outermost peripheral area F0.

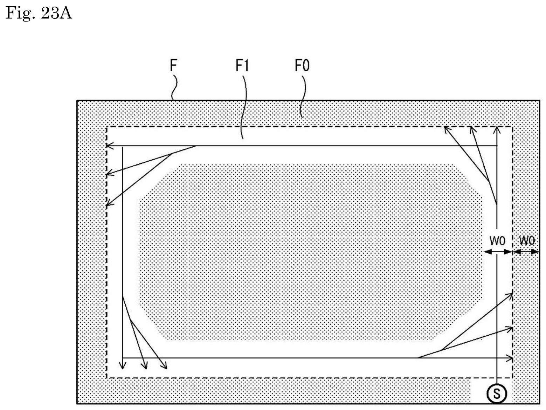

For example, as shown in Fig. 23A, the generation processing unit 312 secures the work width WO for one stroke of the outermost peripheral area F0, sets the start position S and generates the autonomous travel route such that an outer-peripheral-side end of the work width WO of the first stroke of the inner peripheral area F1 substantially coincides with a boundary against the outermost peripheral area F0.

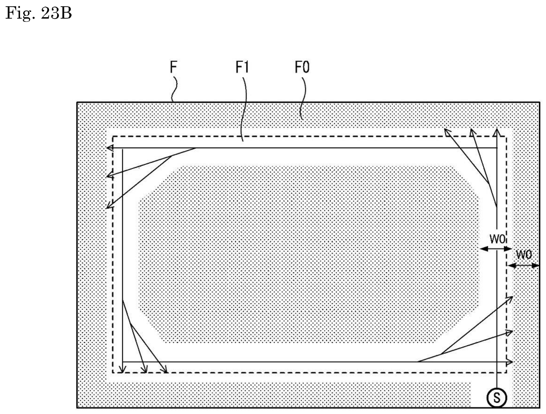

As another embodiment, as shown in Fig. 23B, the generation processing unit 312 secures the work width WO for one stroke of the outermost peripheral area F0, sets the start position S and generates the autonomous travel route such that the outer-peripheral-side end of the work width WO of the first stroke of the inner peripheral area F1 is located inside the outermost peripheral area F0. That is, the generation processing unit 312 shifts the start position S to the outer peripheral side from the position shown in Fig. 23A. As a result, a width of an unworked area, which is to be subjected to reaping, in the outermost peripheral area F0 remaining after reaping work in the inner peripheral area F1 has finished becomes narrower than the work width WO (for one stroke). Therefore, in a case where the reaping work is finally performed on the outermost peripheral area F0, all reaping targets can be reaped only in one stroke.

As described above, the generation processing unit 312 may generate the autonomous travel route such that a part of a work trace in the inner peripheral area F1 and a part of a work trace in the outermost peripheral area F0 overlap each other by a preset setting amount. Note that the setting amount can be changed, and the autonomous travel route may be generated at a position corresponding to the setting amount. For example, the operator may be capable of setting and changing the setting amount on a setting screen of the operation terminal 3. Note that the generation processing unit 312 may set the start position S based on an angular portion of an unworked area (unreaped area) near a current position of the combine harvester 1 in the inner peripheral area F1 inside the outermost peripheral area F0 or a position of the entrance.

In addition, as shown in Figs. 23A and 23B, the generation processing unit 312 generates a corner reaping route in order to secure a turning area necessary for the combine harvester 1 to turn (change a direction) at each corner in the first autonomous travel route (a work route of the first round in the inner peripheral area F1) in the inner peripheral area F1. In addition, when the turning area cannot be secured in a work route of the second round in the inner peripheral area F1, the generation processing unit 312 similarly generates a corner reaping route also in the second round. As described above, the generation processing unit 312 generates the autonomous travel route from the start position S to the end position G while generating the corner reaping route at each corner in the inner peripheral area F1 as necessary. That is, the autonomous travel route in the inner peripheral area F1 according to the present embodiment includes an inclined route (an inclined work route of the present invention) for generating the turning area (a direction changing area) for movement from the first travel route to the second travel route.

Note that the generation processing unit 312 generates the entire autonomous travel route including the corner reaping route before the combine harvester 1 starts autonomous travel from the start position S. As another embodiment, the generation processing unit 312 may generate an autonomous travel route excluding a corner reaping route before the combine harvester 1 starts autonomous travel from the start position S, and may generate the corner reaping route at each corner in accordance with a travel status after the combine harvester 1 starts the autonomous travel. As a method for generating the corner reaping route at each corner in accordance with the travel status, the method for generating the corner reaping route illustrated in the first embodiment (see Figs. 8A to 9C) can be applied.

When the autonomous travel route in the inner peripheral area F1 is generated as described above, the vehicle control device 11 causes the combine harvester 1 to perform reaping work while autonomously traveling along the autonomous travel route in the inner peripheral area F1 in accordance with an autonomous travel start instruction from the operator.

When the reaping work in the inner peripheral area F1 has finished, the vehicle control device 11 switches to the manual travel mode. When the manual travel mode is set, the operator causes the combine harvester 1 to perform manual travel and reaping work in the outermost peripheral area F0. For example, the operator may cause the manual travel in the entire outermost peripheral area F0, or may cause autonomous travel only in a straight portion and the manual travel in a turning portion. For example, the combine harvester 1 may be caused to autonomously travel straight along the reference line L0 (see Fig. 8A) generated by registering points A and B in the straight portion along each outline side of the field F. In addition, the operation control unit 31 may receive, from the operator, operation of selecting whether to cause work in the outermost peripheral area F0 to be performed by manual travel or to cause the work to be performed by autonomous travel along the outline side of the field F.

### [Autonomous travel processing of second embodiment]

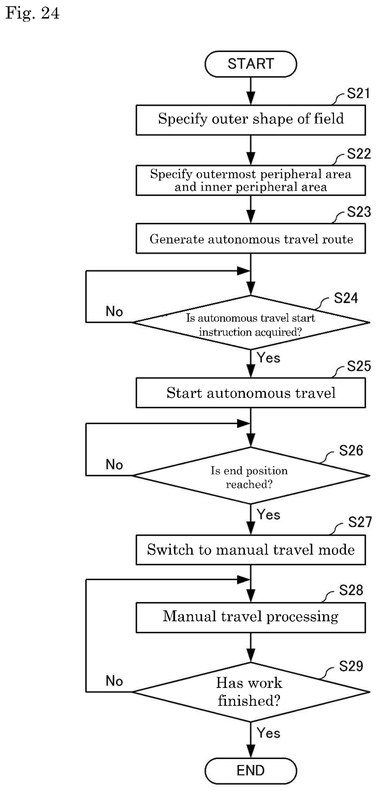

Hereinafter, an example of autonomous travel processing executed by the travel system 10 according to the second embodiment will be described with reference to Fig. 24.

The present invention can be regarded as an invention of an autonomous travel method for executing one or a plurality of steps included in the autonomous travel processing. In addition, one or a plurality of steps included in the autonomous travel processing described here may be appropriately omitted. In addition, an execution order of each step in the autonomous travel processing may be different within a range in which similar operational effects are produced. Furthermore, here, a case where the vehicle control device 11 and the operation control unit 31 execute steps in the autonomous travel processing will be described as an example, but an autonomous travel method in which one or a plurality of processors execute the steps in the autonomous travel processing in a dispersed manner is also considered as another embodiment.

### <Step S21>

In step S21, the operation control unit 31 specifies an outer shape of the field F to be worked. For example, in a case where the field F is unregistered, the operation control unit 31 specifies the outer shape of the field F using map information, image information of an aerial photograph, and the like. In a case where the field F is registered, the operation control unit 31 specifies the outer shape of the field F using the registered information.

### <Step S22>

In step S22, the operation control unit 31 specifies the outermost peripheral area F0 and the inner peripheral area F1 based on the outer shape of the specified field F. Specifically, the operation control unit 31 specifies an area corresponding to one stroke (the work width WO) from each outline side of the field F as the outermost peripheral area F0, and specifies an area obtained by excluding the outermost peripheral area F0 from the field F as the inner peripheral area F1. As another embodiment, the operation control unit 31 may specify, as the outermost peripheral area F0, an area corresponding to two strokes (twice the work width WO) or an area corresponding to three or more strokes from each outline side of the field F.

### <Step S23>

In step S23, the operation control unit 31 generates an autonomous travel route for the inner peripheral area F1. Specifically, the operation control unit 31 sets the start position S of autonomous travel in the inner peripheral area F1 based on position information of the outermost peripheral area F0, and generates the autonomous travel route having the start position S as a starting point.

For example, as shown in Fig. 23A, the operation control unit 31 sets the start position S such that an outer-peripheral-side end of the work width WO of the first stroke of the inner peripheral area F1 substantially coincides with a boundary against the outermost peripheral area F0. As another embodiment, as shown in Fig. 23B, the operation control unit 31 sets the start position S such that the outer-peripheral-side end of the work width WO of the first stroke of the inner peripheral area F1 is located inside the outermost peripheral area F0 by a setting amount (for example, 20 cm).

The operation control unit 31 generates the autonomous travel route based on the set start position S. In addition, the operation control unit 31 generates a corner reaping route including an inclined route for securing a turning area (a direction changing area) at each corner in the autonomous travel route (see Figs. 23A and 23B) of the first round in the inner peripheral area F1. For example, the operation control unit 31 generates a corner reaping route at a necessary corner based on a movement trajectory of each round of the combine harvester 1 in the inner peripheral area F1.

### <Step S24>

In step S24, the vehicle control device 11 determines whether or not an autonomous travel start instruction has been acquired. For example, if the combine harvester 1 satisfies an autonomous travel start condition and the operator performs autonomous travel start instruction operation on the operation terminal 3, the vehicle control device 11 acquires the autonomous travel start instruction from the operation terminal 3. When the vehicle control device 11 acquires the autonomous travel start instruction (S24: Yes), the processing proceeds to step S25. The vehicle control device 11 waits until the autonomous travel start instruction is acquired (S24: No).

### <Step S25>

In step S25, the vehicle control device 11 starts the autonomous travel of the combine harvester 1. Here, the vehicle control device 11 causes the combine harvester 1 to start the autonomous travel from the start position S (see Fig. 21) of the inner peripheral area F1. In addition, the vehicle control device 11 lowers the reaping unit 15 to the work height H1 and starts reaping work from a reaping start position. The combine harvester 1 executes the reaping work while autonomously traveling along the autonomous travel route. In addition, in a circling route in which a corner reaping route is generated, the combine harvester 1 secures a turning area by performing the reaping work while traveling forward and backward along the corner reaping route at each corner (see Figs. 23A and 23B).

In addition, in a circling route in which no corner reaping route is generated, the combine harvester 1 performs the reaping work while changing a direction in a turning area of a worked area.

### <Step S26>

In step S26, the vehicle control device 11 determines whether or not the combine harvester 1 has reached the end position G. That is, the vehicle control device 11 determines whether or not the combine harvester 1 has finished the reaping work in the inner peripheral area F1. When the combine harvester 1 reaches the end position G (S26: Yes), the vehicle control device 11 causes the processing to proceed to step S27. The vehicle control device 11 continues the autonomous travel until the combine harvester 1 reaches the end position G (S26: No).

### <Step S27>

In step S27, the vehicle control device 11 switches to the manual travel mode. The vehicle control device 11 may automatically switch to the manual travel mode when the combine harvester 1 reaches the end position G, or may switch to the manual travel mode when the operator performs operation to switch to the manual travel mode after the combine harvester 1 has reached the end position G and stopped.

### <Step S28>

In step S28, the vehicle control device 11 causes the combine harvester 1 to perform manual travel in accordance with the operation of the operator. For example, the operator causes the combine harvester 1 to move to the outermost peripheral area F0 and perform the reaping work while traveling in the outermost peripheral area F0.

### <Step S29>

In step S29, the vehicle control device 11 determines whether or not the reaping work has finished. For example, when the combine harvester 1 manually travels in the outermost peripheral area F0 and completes the reaping work, the operator gives a work end instruction on the operation terminal 3. When the operator gives the work end instruction, the vehicle control device 11 determines that the reaping work has finished (S29: Yes), and ends the autonomous travel processing. The vehicle control device 11 continues the manual travel and the reaping work in the outermost peripheral area F0 until the work end instruction is acquired (S29: No).

As described above, the travel system 10 according to the second embodiment generates the autonomous travel route for causing the autonomous travel of the combine harvester 1 with respect to the entire inner peripheral area F1 excluding the outermost peripheral area F0 of the field F. Specifically, the travel system 10 sets the start position S of the autonomous travel route based on the position information of the outermost peripheral area F0. In addition, the travel system 10 specifies the position of the outermost peripheral area F0 based on the outer shape of the field F, and sets the start position S of the autonomous travel route based on the position information of the outermost peripheral area F0 and the work width WO of the combine harvester 1.

According to the above configuration, the combine harvester 1 is caused to autonomously travel in the inner peripheral area F1 and perform the reaping work, and after the reaping work in the inner peripheral area F1 has finished, the combine harvester 1 is caused to perform the reaping work in the outermost peripheral area F0. In the reaping work in the inner peripheral area F1, since there is no possibility that the combine harvester 1 protrudes out of the field, the reaping work in the inner peripheral area F1 can be efficiently executed. In addition, since the reaping work in the inner peripheral area F1 has finished at the time of starting the reaping work in the outermost peripheral area F0, and there is no object to be reaped (grain culm) in the inner peripheral area F1, the operator can easily change the direction of the combine harvester 1 when performing the reaping work in the outermost peripheral area F0 by manual travel. Therefore, the reaping work in the outermost peripheral area F0 can be performed safely and efficiently.

In the above configuration, the operation control unit 31 may generate or update the outer shape of the field F when the reaping work in the outermost peripheral area F0 has finished. As described above, even in a case where the outer shape of the field F is not specified, the outer shape of the field F may be specified and registered by executing the reaping work in the inner peripheral area F1 in advance and then executing the reaping work in the outermost peripheral area F0.

Here, for example, in a case where the work is executed in the inner peripheral area F1 prior to the outermost peripheral area F0, there is a possibility that the reaping unit 15 comes into contact with grain culms in the outermost peripheral area F0 in front of the combine harvester 1 when the reaping unit 15 is raised. Therefore, the vehicle control device 11 may cause the combine harvester 1 to travel backward by a predetermined distance before raising the reaping unit 15, and may raise the reaping unit 15 after securing a gap with the grain culms on the front.

As another embodiment of the second embodiment, the outermost peripheral area F0 may be set to have a width corresponding to two strokes (two rounds). In this case, the generation processing unit 312 sets the start position S at a position spaced by two strokes and generates the autonomous travel route in the inner peripheral area F1. Then, when reaping work in the inner peripheral area F1 has finished, the vehicle control device 11 switches to the manual travel mode, and the operator causes the combine harvester 1 to manually travel to execute reaping work for two rounds. Note that the width of the outermost peripheral area F0 is not limited, and may be a width corresponding to three or more strokes (three or more rounds).

As still another embodiment, the travel system 10 may execute reaping work in the outermost peripheral area F0 after reaping work for the first round in the inner peripheral area F1. For example, as shown in Figs. 23A and 23B, the vehicle control device 11 may cause the combine harvester 1 to execute the reaping work for the first round in the inner peripheral area F1, and then switch to the manual travel mode to execute the reaping work in the outermost peripheral area F0. In addition, when the reaping work in the outermost peripheral area F0 has finished, the vehicle control device 11 may cause the combine harvester 1 to start autonomous travel for the second and subsequent rounds in the inner peripheral area F1 to execute the reaping work. That is, the reaping work in the outermost peripheral area F0 may be executed at any timing as long as it is after the reaping work for the first round in the inner peripheral area F1.

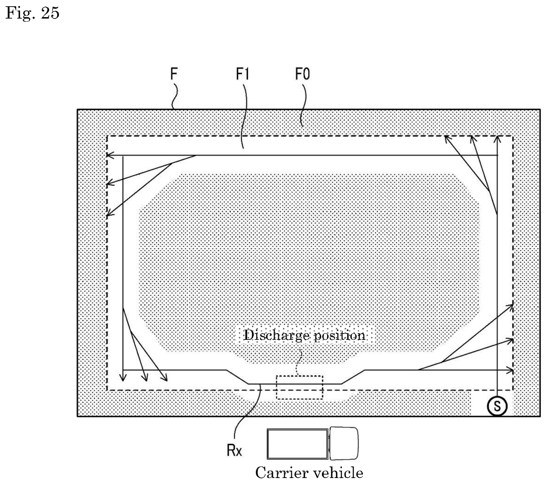

As still another embodiment, as shown in Fig. 25, the operation control unit 31 may set a discharge position of harvested products based on a trajectory of the first circling (travel for the first round in the inner peripheral area F1) of the combine harvester 1. For example, when the operator shifts a travel position of the combine harvester 1 to the outer peripheral side of the field F (a route Rx in Fig. 25) while the combine harvester 1 is autonomously traveling, the operation control unit 31 sets the discharge position on the route Rx. When the discharge position is set, the vehicle control device 11 causes the combine harvester 1 to move to the discharge position and execute discharge work if a discharge timing arrives.

In addition, as another embodiment, before the outermost peripheral area F0 is subjected to the reaping work after the reaping work in the inner peripheral area F1 has finished, the vehicle control device 11 may determine whether or not it is necessary to move to the discharge position based on an estimated harvest of crops harvested by the reaping work in the outermost peripheral area F0 and a remaining harvestable amount of the combine harvester 1. Then, in a case where the estimated harvest exceeds the harvestable amount, the vehicle control device 11 causes the combine harvester 1 to move to the discharge position and execute the discharge work before the reaping work in the outermost peripheral area F0. On the other hand, in a case where the estimated harvest does not exceed the harvestable amount, the vehicle control device 11 causes the combine harvester 1 to move to the outermost peripheral area F0 and execute the reaping work without executing the discharge work. As a result, unnecessary discharge work is not performed, so that work efficiency can be improved.

### [Third embodiment]

The travel system 10 according to a third embodiment has a configuration to estimate an outer shape of the field F to be worked when the shape of the field F has not been specified (registered), and generate a travel route at a corner of a work area based on the estimated outline La (an example of a reference line of the present invention).

Specifically, when stop information of travel or work is acquired while the combine harvester 1 is traveling (autonomously traveling or manually traveling) along a straight line (reference line L0) passing through points A and B (an example of a first travel route of the present invention), the generation processing unit 312 sets the outline La that passes through a predetermined position corresponding to a travel stop position or a work stop position of the combine harvester 1 and has a predetermined angle with respect to the reference line L0. As described above, the stop information is information on operation to stop the travel of the combine harvester 1, information on operation to raise the reaping unit 15 to the non-work height H0, and the like.

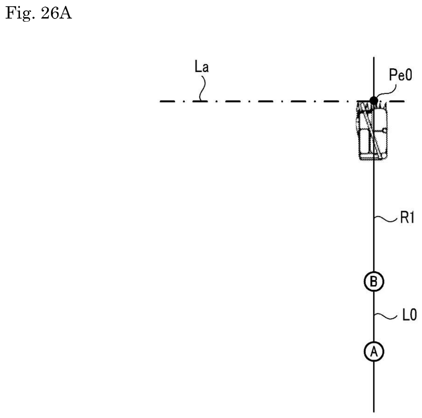

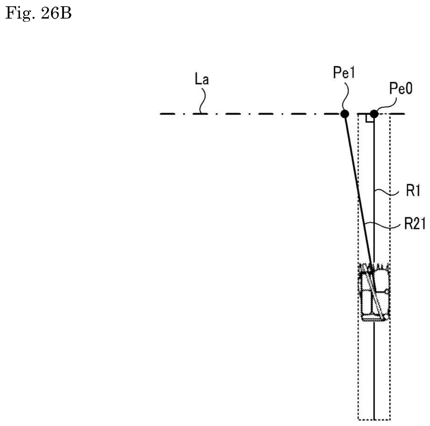

For example, as shown in Fig. 26A, when an operator stops the combine harvester 1 at a predetermined position and raises the reaping unit 15 while the combine harvester 1 is autonomously traveling along the work route R1 (the first travel route) corresponding to the reference line L0, the generation processing unit 312 sets the predetermined position as a terminal end Pe0 of the work route R1. Then, the generation processing unit 312 sets the outline La that passes through the terminal end Pe0 and has a predetermined angle (for example, 90 degrees) with respect to the work route R1. Next, the generation processing unit 312 generates the inclined route R21 for the combine harvester 1 to work at a corner generated at a connection portion between the work route R1 and the outline La. For example, the generation processing unit 312 generates the inclined route R21 inclined with respect to the work route R1 (see Fig. 26B). For example, the generation processing unit 312 generates the inclined route R21 using the configuration (see Figs. 8C and 8D) illustrated in the first embodiment. In addition, the generation processing unit 312 sets a terminal end Pe1 of the inclined route R21 on the outline La.

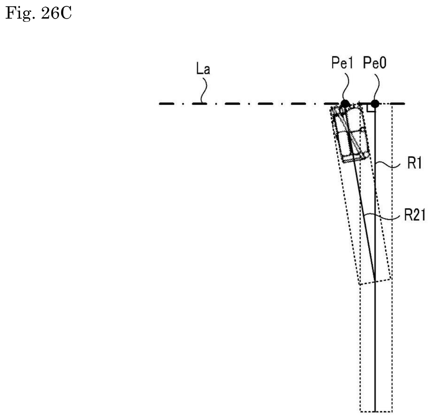

After the inclined route R21 is generated, when the combine harvester 1 satisfies autonomous travel start conditions, the vehicle control device 11 causes the combine harvester 1 to execute reaping work while autonomously traveling along the inclined route R21. Here, the outline La is displayed on the operation terminal 3. As a result, the operator can cause the reaping work to be performed using the outline La as a mark. When the combine harvester 1 reaches the outline La (see Fig. 26C), the operator performs stop operation (operation to raise the reaping unit 15). Note that the operation control unit 31 may notify the operator when a distance from the combine harvester 1 to the outline La is within a predetermined distance. For example, when the distance from the combine harvester 1 to the outline La reaches the predetermined distance, the operation control unit 31 notifies the operator that the combine harvester 1 has approached the outline La by means such as voice or screen display. When recognizing the notification, the operator performs the stop operation to stop the reaping work on the inclined route R21.

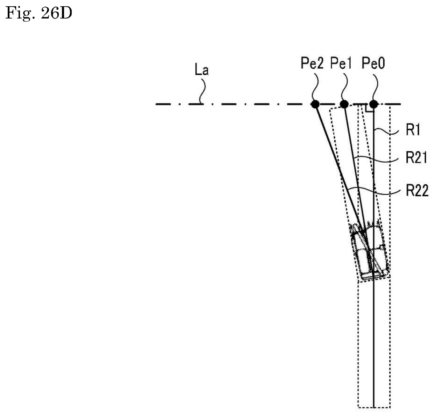

Thereafter, the vehicle control device 11 causes the combine harvester 1 to travel backward to a predetermined position along the inclined route R21. In addition, the generation processing unit 312 similarly generates the next inclined route R22 and sets a terminal end Pe2 of the inclined route R22 on the outline La (see Fig. 26D). After the inclined route R22 is generated, when the combine harvester 1 satisfies the autonomous travel start conditions, the vehicle control device 11 causes the combine harvester 1 to execute reaping work while autonomously traveling along the inclined route R22. When the combine harvester 1 approaches the outline La and the operator performs the stop operation, the vehicle control device 11 stops the autonomous travel and the reaping work. When a turning area (direction changing area) is secured at a corner formed by the work route R1 and the outline La, the vehicle control device 11 ends corner reaping work and causes the combine harvester 1 to move to the next work route along the outline La (see Fig. 10).

Here, the operator may stop travel or work of the combine harvester 1 at a position shifted from the outline La set based on the reference line L0 (the work route R1). For example, in a case where the operator gets on the combine harvester 1 and performs the reaping work while checking a reaping target, the operator causes the combine harvester 1 to travel to a position beyond the outline La or to the front of the outline La and performs the reaping work when recognizing that a boundary of an actual field deviates from the outline La. In this case, it becomes difficult to appropriately perform the reaping work at the corner, for example, if each inclined route is generated based on the outline La at 90 degrees with respect to the reference line L0 (the work route R1).

Therefore, after the outline La is set, the generation processing unit 312 may be able to change the angle (predetermined angle) formed by the outline La and the reference line L0. Then, when the predetermined angle is changed, the generation processing unit 312 may set an inclined route based on the outline La for which the predetermined angle is changed.

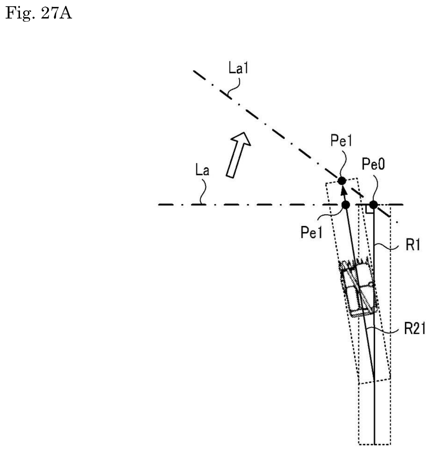

For example, as shown in Fig. 27A, when the operator does not perform operation to stop the combine harvester 1 at the terminal end Pe1 after the inclined route R21 in which the terminal end Pe1 is set on the outline La has been generated and the combine harvester 1 has started the autonomous travel, the vehicle control device 11 causes the combine harvester 1 to continue the autonomous travel and the reaping work along an extension line of the inclined route R21. Thereafter, when the operator recognizes an end of the reaping target and performs the stop operation, the vehicle control device 11 stops the autonomous travel and the reaping work of the combine harvester 1, and causes the combine harvester 1 to travel backward along the inclined route R21. Then, the generation processing unit 312 resets the terminal end Pe1 of the inclined route R21 to a stop position of the combine harvester 1 and changes (updates) the inclined route R21.

As shown in Fig. 27A, the generation processing unit 312 changes the predetermined angle of the outline La based on the updated inclined route R21 and updates the outline La to an outline La1. Specifically, the generation processing unit 312 changes the predetermined angle of the outline La when receiving predetermined operation (travel stop operation, work stop operation, or the like) from the operator after the combine harvester 1 starts traveling toward the outline La, or when the combine harvester 1 is in a predetermined state (a stop state, a work stop state, or the like). For example, the generation processing unit 312 changes the predetermined angle of the outline La based on a straight line passing through the terminal end Pe0 of the work route R1 and a position of the combine harvester 1 when the predetermined operation is received (the updated terminal end Pe1) or a position of the combine harvester 1 when the combine harvester 1 is in the predetermined state. That is, the generation processing unit 312 sets the straight line passing through the updated terminal end Pe1 and the terminal end Pe0 of the work route R1 as the changed outline La1. The operation control unit 31 causes the operation terminal 3 to display the updated outline La1.

Note that the predetermined operation is any one of operation to stop the combine harvester 1, operation to cause the combine harvester 1 to travel backward, and operation to change the reaping unit 15 from the work height H1 to the non-work height H0. In addition, the predetermined state is any one of a state in which the combine harvester 1 is stopped, a state in which the combine harvester 1 starts traveling backward, and a state in which the reaping unit 15 is changed from the work height H1 to the non-work height H0.

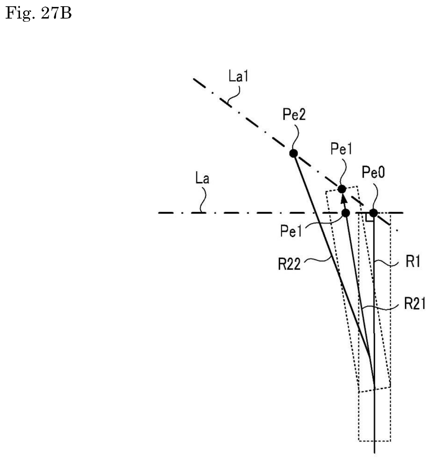

In addition, the generation processing unit 312 generates the next inclined route R22 based on the updated outline La1. Further, as shown in Fig. 27B, the terminal end Pe2 of the inclined route R22 is set on the outline La1. After the inclined route R22 is generated, when the combine harvester 1 satisfies the autonomous travel start conditions, the vehicle control device 11 causes the combine harvester 1 to execute reaping work while autonomously traveling along the inclined route R22 toward the outline La1. The operator causes the reaping work to be performed using the outline La1 as a mark. When the combine harvester 1 reaches the outline La1, the operator performs the stop operation (operation to raise the reaping unit 15). Here, when the operator performs the stop operation at a position shifted from the outline La1, the generation processing unit 312 may change the outline La1 again. For example, the generation processing unit 312 may set, as the new outline La1, a straight line passing through the terminal end Pe0 and passing through a position (average position) between the terminal end Pe1 on the outline La1 and a stop position of the combine harvester 1 on the inclined route R22.

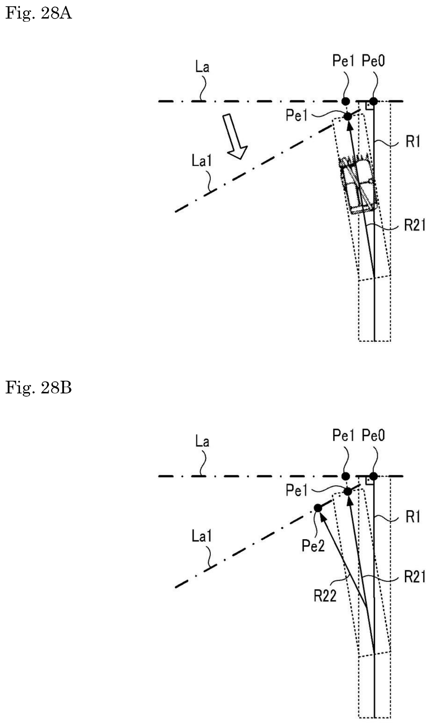

As another embodiment, as shown in Fig. 28A, when the operator performs the stop operation in front of the outline La, the generation processing unit 312 updates a position of the terminal end Pe1 to a stop position of the combine harvester 1. Then, the generation processing unit 312 sets a straight line passing through the updated terminal end Pe1 and the terminal end Pe0 of the work route R1 as the changed outline La1. In addition, the generation processing unit 312 sets the next inclined route R22 based on the updated outline La1. For example, as shown in Fig. 28B, the terminal end Pe2 of the inclined route R22 is set on the outline La1.

As described above, the predetermined operation may be operation performed before the combine harvester 1 reaches the outline La (see Figs. 28A and 28B) or after the combine harvester 1 exceeds the outline La (see Figs. 27A and 27B). Similarly, the predetermined state may be a state before the combine harvester 1 reaches the outline La (see Figs. 28A and 28B) or after the combine harvester 1 exceeds the outline La (see Figs. 27A and 27B).

In the above-described embodiment, the travel and the reaping work of the combine harvester 1 are stopped in accordance with the stop operation of the operator. As another embodiment, the vehicle control device 11 may automatically stop travel and reaping work at terminal ends of a travel route and an inclined route. For example, when the inclined route R21 is generated based on the outline La (see Fig. 26B), the vehicle control device 11 causes the combine harvester 1 to autonomously travel along the inclined route R21 and stops the combine harvester 1 at the terminal end Pe1 set on the outline La (see Fig. 26B). Thereafter, when the operator raises the reaping unit 15, the vehicle control device 11 causes the combine harvester 1 to travel backward along the inclined route R21. In addition, the generation processing unit 312 generates the next inclined route R22 (see Fig. 26D).

Here, after the combine harvester 1 stops at the terminal end Pe1 set on the outline La, when the operator returns the main shift lever to neutral once and then shifts the main shift lever to a forward (accelerating) position again while maintaining the reaping unit 15 at the work height H1, the vehicle control device 11 causes the combine harvester 1 to perform reaping work while autonomously traveling on an extension line of the inclined route R22 after passing through the terminal end Pe1 (see Fig. 27A). Thereafter, when the operator stops the travel and the reaping work of the combine harvester 1, the generation processing unit 312 updates the terminal end Pe1 to a stop position. Then, the generation processing unit 312 updates the outline La1 passing through the terminal end Pe1 and the terminal end Pe0 based on the updated inclined route R21. The generation processing unit 312 generates the next inclined route R22 based on the updated outline La1.

As described above, after the combine harvester 1 temporarily stops on the outline La by the autonomous travel, when the operator performs operation to continue the reaping work, the generation processing unit 312 updates the outline La based on the stop position after the reaping work by such continuing operation. Also in this configuration, a configuration in which the operation control unit 31 notifies the operator when the combine harvester 1 approaches the outline La may be applied.

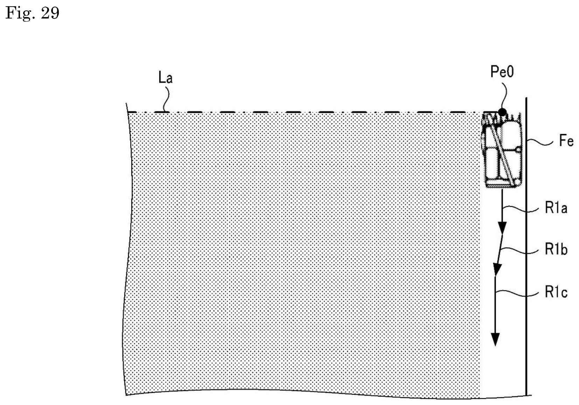

As another embodiment, when the combine harvester 1 is caused to travel backward along a boundary (an outer peripheral end) in the outermost peripheral area F0 of the field F, as shown in Fig. 29, the vehicle control device 11 may cause the combine harvester 1 to travel backward while turning to the left such that a right front end of the vehicle body does not protrude out of the field F or come into contact with a ridge near the boundary of the field F. For example, as shown in Fig. 29, the vehicle control device 11 may cause the combine harvester 1 to autonomously travel backward along a backward straight route R1a, a backward inclined route R1b (or a backward left-turning route), and a backward straight route R1c. As a result, when the combine harvester 1 travels backward, it is possible to prevent the right front end of the vehicle body from protruding out of the field F or coming into contact with the ridge.

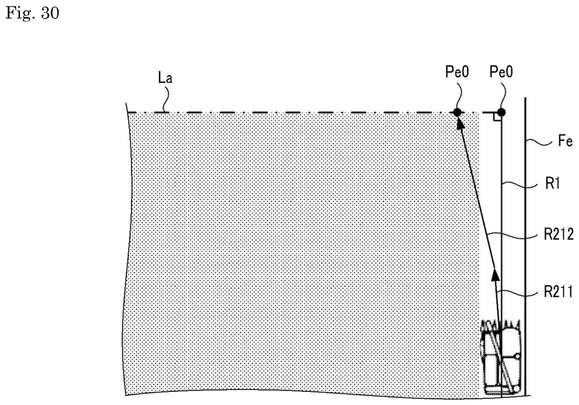

Similarly, when causing the combine harvester 1 to autonomously travel along the inclined route to perform the corner reaping work, as shown in Fig. 30, the vehicle control device 11 may first cause the combine harvester 1 to travel along a straight route R211 having a small angle with respect to the work route R1, and then travel along a straight route R212 having a large angle with respect to the work route R1 such that a right rear end of the vehicle body does not protrude out of the field F or come into contact with the ridge near the boundary. As a result, when the combine harvester 1 travels forward on the inclined route, it is possible to prevent the right rear end of the vehicle body from protruding out of the field F or coming into contact with the ridge.

### [Route generation processing of third embodiment]

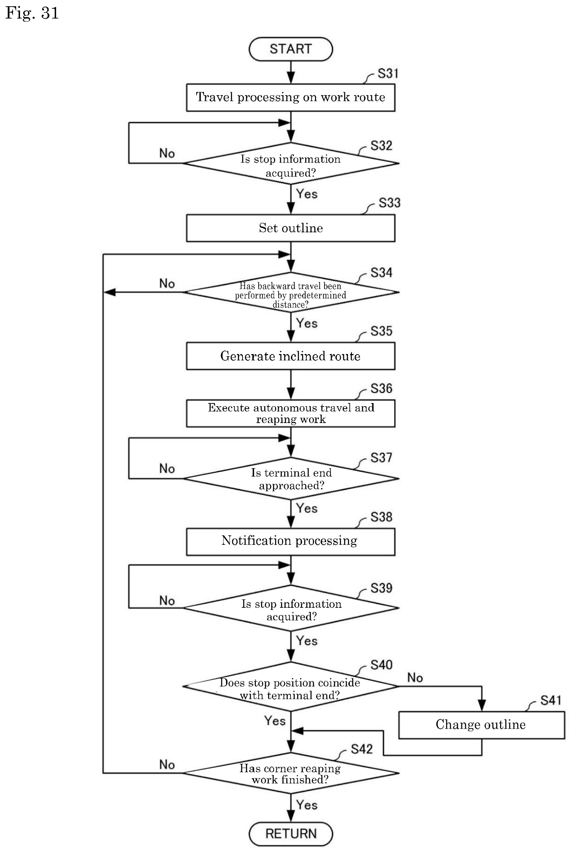

Hereinafter, an example of corner reaping route generation processing (route generation processing) executed by the travel system 10 according to the third embodiment will be described with reference to Fig. 31.

### <Step S31>

In step S31, the vehicle control device 11 executes travel processing on a work route in a work area. For example, as shown in Fig. 26A, the operator gets on the combine harvester 1, starts straight travel (manual travel) along an outer peripheral edge of the work area, and starts reaping work. In addition, the operator performs registration operation to register points A and B on the operation terminal 3. The operation control unit 31 generates the reference line L0 passing through the points A and B. As a result, the vehicle control device 11 causes the combine harvester 1 to perform the reaping work while autonomously traveling along the reference line L0 (the work route R1).

### <Step S32>

In step S32, the operation control unit 31 determines whether or not stop information of travel or work has been acquired while the combine harvester 1 is traveling on the work route. Specifically, the operation control unit 31 determines whether or not the combine harvester 1 has ended the autonomous travel or whether or not the reaping work on the work route has finished. For example, when receiving operation to raise the reaping unit 15 from the work height H1 to the non-work height H0 from the operator, the operation control unit 31 determines that information on the operation (an example of the stop information) has been acquired (the reaping work has finished).

When the operation control unit 31 determines that the stop information is acquired (S32: Yes), the processing proceeds to step S33. The operation control unit 31 waits until the stop information is acquired (S32: No).

### <Step S33>

In step S33, the operation control unit 31 sets the outline La based on the stop information. For example, as shown in Fig. 26A, when the operator raises the reaping unit 15 at a predetermined position while the combine harvester 1 is autonomously traveling along the work route R1, the operation control unit 31 sets the predetermined position as the terminal end Pe0 of the work route R1, and sets the outline La (reference line) having 90 degree with respect to the work route R1 passing through the terminal end Pe0.

### <Step S34>

In step S34, the operation control unit 31 determines whether or not the combine harvester 1 has traveled backward by the predetermined distance Lm. Specifically, when the operator shifts the main shift lever to the reverse position at the terminal end Pe0, the combine harvester 1 starts autonomous travel in the backward direction along the work route R1. When the combine harvester 1 travels backward by the predetermined distance Lm (for example, 10 m) along the work route R1 (S34: Yes), the operation control unit 31 causes the processing to proceed to step S35. The vehicle control device 11 continues the backward autonomous travel processing until the backward travel distance of the combine harvester 1 reaches the predetermined distance Lm, and the operation control unit 31 waits until the backward travel distance reaches the predetermined distance Lm (S34: No).

### <Step S35>

In step S35, the operation control unit 31 generates the inclined route R21 inclined with respect to the work route R1 (see Fig. 26B). For example, the operation control unit 31 generates the inclined route R21 corresponding to the work width WO on the left side of the worked area of the work route R1. In addition, the operation control unit 31 sets the terminal end Pe1 of the inclined route R21 on the outline La. Note that the operation control unit 31 can set the inclined route R21 using the configuration according to the first embodiment (see Figs. 8C and 8D and the like).

### <Step S36>

In step S36, the vehicle control device 11 causes the combine harvester 1 to autonomously travel along the inclined route R21 and execute reaping work. Specifically, the vehicle control device 11 causes the combine harvester 1 to start the autonomous travel and the reaping work when the combine harvester 1 satisfies the autonomous travel start conditions for the inclined route R21.

### <Step S37>

In step S37, the operation control unit 31 determines whether or not the combine harvester 1 has approached the outline La. Specifically, the operation control unit 31 determines whether or not a distance from a current position of the combine harvester 1 to the outline La is within a predetermined distance. When the distance from the current position of the combine harvester 1 to the outline La is within the predetermined distance (S37: Yes), the operation control unit 31 causes the processing to proceed to step S38. The operation control unit 31 waits until the distance from the current position of the combine harvester 1 to the outline La is within the predetermined distance (S37: No).

### <Step S38>

In step S38, the operation control unit 31 notifies the operator that the combine harvester 1 has approached the outline La by means such as sound or screen display. Note that the operation control unit 31 may increase the volume of a notification sound or emphasize a display mode of notification display as the distance from the current position of the combine harvester 1 to the outline La becomes shorter.

### <Step S39>

In step S39, the operation control unit 31 determines whether or not the combine harvester 1 has acquired the stop information. Specifically, the operation control unit 31 determines whether or not the combine harvester 1 has ended the autonomous travel along the inclined route R21 or whether or not the reaping work on the inclined route R21 has finished.

When the operation control unit 31 determines that the stop information is acquired (S39: Yes), the processing proceeds to step S40. The operation control unit 31 waits until the stop information is acquired (S39: No).

### <Step S40>

In step S40, the operation control unit 31 determines whether or not the stop position (travel stop position or work stop position) of the combine harvester 1 substantially coincides with the terminal end Pe1 of the inclined route R21 set on the outline La. When the operation control unit 31 determines that the stop position of the combine harvester 1 substantially coincides with the terminal end Pe1 (S40: Yes), the processing proceeds to step S42. On the other hand, when the operation control unit 31 determines that the stop position of the combine harvester 1 does not substantially coincide with the terminal end Pe1 (S40: Yes), that is, when the stop position of the combine harvester 1 exceeds the outline La or is in front of the outline La, the processing proceeds to step S41.

For example, in the example shown in Fig. 26C, the stop position of the combine harvester 1 substantially coincides with the terminal end Pe1 of the inclined route R21. On the other hand, for example, the stop position of the combine harvester 1 is the position beyond the outline La in the example shown in Fig. 27A, and the stop position of the combine harvester 1 is the position in front of the outline La in the example shown in Fig. 28A.

### <Step S41>

In step S41, the operation control unit 31 changes (updates) the outline La based on the stop position of the combine harvester 1. For example, as shown in Fig. 27A, the operation control unit 31 resets the terminal end Pe1 of the inclined route R21 to the stop position of the combine harvester 1 and changes (updates) the inclined route R21. Then, the operation control unit 31 sets a straight line passing through the stop position of the combine harvester 1 (the updated terminal end Pe1) and the terminal end Pe0 of the work route R1 as the changed outline La1. Also in the example shown in Fig. 28A, the operation control unit 31 similarly sets a straight line passing through the stop position of the combine harvester 1 (the updated terminal end Pe1) and the terminal end Pe0 of the work route R1 as the changed outline La1. When the outline La is changed, the operation control unit 31 causes the processing to proceed to step S42.

### <Step S42>

In step S42, the operation control unit 31 determines whether or not the corner reaping work has finished. For example, when the operator presses an end button (not shown) on the operation screen, the operation control unit 31 determines that the corner reaping work has finished. As another embodiment, the operation control unit 31 may determine whether or not a turning area necessary for turning when the combine harvester 1 moves to the next work route is secured at the corner, determine that the corner reaping work has finished when the turning area is secured, and determine that the corner reaping work has not finished when the turning area is not secured.

When the corner reaping work has not finished (S42: No), the vehicle control device 11 causes the processing to proceed to step S34 and causes the combine harvester 1 to travel backward. In addition, the operation control unit 31 generates the next inclined route R22. For example, as shown in Fig. 26C, when the stop position of the combine harvester 1 substantially coincides with the terminal end Pe1 of the inclined route R21, the operation control unit 31 sets the terminal end Pe2 on the outline La and generates the inclined route R22 as shown in Fig. 26D.

On the other hand, for example, as shown in Fig. 27A, when the stop position of the combine harvester 1 does not coincide with the terminal end Pe1 of the inclined route R21, the operation control unit 31 sets the terminal end Pe2 on the updated outline La1 and generates the inclined route R22 as shown in Fig. 27B.

The vehicle control device 11 causes the combine harvester 1 to execute autonomous travel and reaping work along the generated inclined route R22.

The operation control unit 31 and the vehicle control device 11 repeatedly execute the processing from steps S34 to S41 until the corner reaping work finishes. When the corner reaping work has finished (S42: Yes), the vehicle control device 11 causes the processing to proceed to step S31 and executes travel processing on the next work route. Specifically, the vehicle control device 11 executes travel processing on the work route in a direction along the outline La or the outline La1. The operation control unit 31 and the vehicle control device 11 execute the above processing for each side and each corner of the work area.

In a case where reaping work on the outer periphery of the work area has finished by the above processing, the operation control unit 31 registers, as the field F, an area at the outermost peripheral position obtained by a work trajectory on the outer periphery. When the field F is registered, autonomous travel and reaping work (see Fig. 15) may be executed for an area (the inner peripheral area F1) inside the outermost peripheral position in the same manner as the configuration described in the first embodiment.

As described above, when the stop information of travel or work is acquired while the combine harvester 1 is traveling on the work route R1 in the work area, the travel system 10 according to the third embodiment sets the outline La (a reference line), which passes through a predetermined position (the terminal end Pe0 of the work route R1) corresponding to the travel stop position or the work stop position of the combine harvester 1 and has a predetermined angle with respect to the work route R1, and generates the travel route (inclined route) for the combine harvester 1 to work at the corner generated at the connection portion between the work route R1 and the outline La. In addition, the travel system 10 may be capable of changing the predetermined angle after setting the outline La. In addition, when the predetermined angle is changed, the travel system 10 may generate the inclined route based on the outline La1 in which the predetermined angle is changed. Note that the inclined route (a second travel route of the present invention) is a route for traveling at the corner of the work area, and is a route inclined with respect to the work route R1 (a first travel route of the present invention).

According to the above configuration, even when the shape of the field is unknown, it is possible to estimate the outer shape of the field based on the stop operation performed by the operator and generate the inclined route of the corner reaping work. In addition, in a case where the operator has performed the stop operation at a different position with respect to the estimated outer shape of the field, the estimated outer shape of the field can be changed, and the next inclined route can be generated so as to correspond to the changed outer shape. Therefore, for example, even when the shape of the field is unknown, it is possible to generate a travel route for working a corner, and thus, it is possible to improve the work accuracy at the corner.

In the above-described embodiment, the operation control unit 31 sets the outline La at 90 degrees with respect to the work route R1, but the predetermined angle is not limited to 90 degrees. For example, the operation control unit 31 may specify a rough outer shape of the work area using map information of the work area, image information of an aerial photograph, and the like, and set the outline La having a predetermined angle in accordance with the specified outer shape. In addition, the operation control unit 31 may receive input operation of the predetermined angle from the operator and set the outline La of the input angle.

As another embodiment, the operation control unit 31 may be configured to omit the process of setting the outline La and set the outline La1 based on operation (stop operation) of the operator. Specifically, the vehicle control device 11 causes the combine harvester 1 to autonomously travel along the next inclined route R21 inclined with respect to the work route R1 without setting the outline La after the combine harvester 1 finishes the autonomous travel and the reaping work on the work route R1, and the operator stops the autonomously traveling combine harvester 1 at any position. As a result, the generation processing unit 312 sets a straight line passing through the terminal end Pe0 of the work route R1 and the stop position (the terminal end Pe1) as the outline La1. Then, the generation processing unit 312 generates the next inclined route R22 based on the outline La1.

As described above, when a predetermined operation (travel stop operation or work stop operation) is received from the operator after the combine harvester 1 starts traveling in a direction inclined with respect to the work route R1, or when the combine harvester 1 is in a predetermined state (a travel stop state or a work stop state), the generation processing unit 312 may set, as the outline La1 (reference line), a straight line passing through a position of the combine harvester 1 when the predetermined operation is received or a position of the combine harvester 1 when the combine harvester 1 is in the predetermined state and the predetermined position and generate the inclined route (the second travel route) terminating on the outline La1.

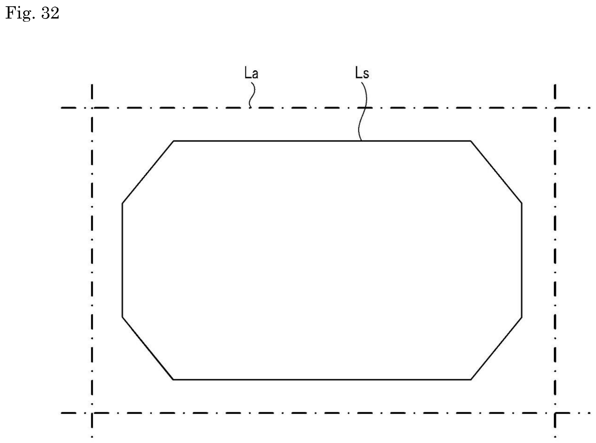

As another embodiment, as shown in Fig. 32, the generation processing unit 312 may generate a work target line Ls (a recommended area) representing a recommended work range of the corner. Specifically, a position corresponding to the work width WO (one stroke) from the outline La or the outline La1 is set as the work target line Ls. The work target line Ls represents a target position (mark) when the operator causes the combine harvester 1 to perform manual travel and reaping work in the outermost peripheral area. In addition, the work target line Ls represents a target position where autonomous travel is possible. For example, when the reaping work has been completed up to the work target line Ls, the autonomous travel can be performed inside the work target line Ls. For example, the work target line Ls is displayed on the operation terminal 3, and the operator causes the combine harvester 1 to travel and perform the reaping work in the outermost peripheral area along the outline La1 while checking the work target line Ls. When the reaping work has finished up to the work target line Ls, the generation processing unit 312 generates an autonomous travel route for an area (the inner peripheral area F1) inside the work target line Ls, and the vehicle control device 11 causes the combine harvester 1 to execute the autonomous travel and the reaping work along the autonomous travel route.

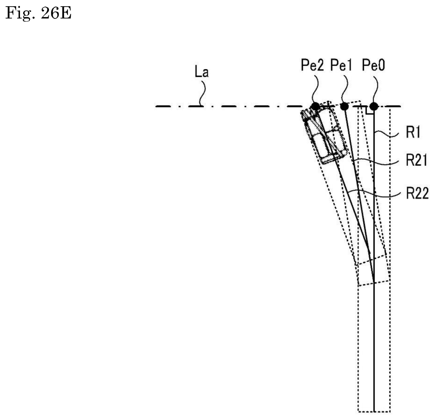

As another embodiment, the operator may be allowed to select a corner reaping route on which autonomous travel and reaping work are executed first among a plurality of corner reaping routes. For example, it is assumed that the generation processing unit 312 sets the outline La, which passes through the terminal end Pe0 of the work route R1 and has a predetermined angle (for example, 90 degrees) with respect to the work route R1, and generates the inclined routes R21 and R22 having the terminal ends Pe1 and Pe2, respectively, on the outline La before the combine harvester 1 starts the corner reaping work (see Fig. 26E). In this case, for example, when the operator selects the inclined route R22, the vehicle control device 11 causes the combine harvester 1 to start autonomous travel and reaping work on the inclined route R22, and then causes the combine harvester 1 to execute autonomous travel and reaping work on the inclined route R21 when the reaping work on the inclined route R22 has finished. As described above, the operator may be allowed to start reaping work from a desired position for the corner reaping route. For example, the operator may select a first travel mode in which reaping work on each inclined route is performed in order from the outer side to the inner side of the field and a second travel mode in which reaping work on each inclined route is performed in order from the inner side to the outer side of the field. In addition, the operator may select one of the first travel mode and the second travel mode for each of a plurality of corners.

In addition, in a case where a plurality of inclined routes are included at a corner reaping route, the operator may be allowed to set the execution order of reaping work. For example, with respect to three inclined routes included at a corner reaping route, the operator may set the inner inclined route as the first, the outer inclined route as the second, and the intermediate inclined route as the third.

In addition, for example, when the combine harvester 1 autonomously travels on an inclined route selected by the operator and the operator performs operation to stop travel or work of the combine harvester 1 at a position shifted from the outline La, the generation processing unit 312 may update the outline La1 based on a stop position of the combine harvester 1 or a position of the stop operation.

In each of the above-described embodiments, the combine harvester 1 has been described as an example of the work vehicle. However, the work vehicle of the present invention is not limited to the combine harvester 1, and may be various work vehicles such as a tractor, a transplanter, and a construction machine.

### [Supplementary note 1 of invention]

Hereinafter, an overview of the invention extracted from the first embodiment will be supplementarily described. Note that configurations and processing functions, which are described in the following supplementary notes, can be selected and freely combined.

### <Supplementary note 1>

A route generation method for generating a travel route for a work vehicle to perform predetermined work in a work area, the route generation method including generating, when stop information of travel or the work is acquired while the work vehicle is traveling on a first travel route, a second travel route for travel subsequently to the first travel route based on a predetermined position corresponding to a travel stop position or a work stop position of the work vehicle and a work width of the work vehicle.

### <Supplementary note 2>

The route generation method according to Supplementary note 1, including, when the stop information is acquired, setting a reference point at the predetermined position corresponding to the first travel route, and generating the second travel route based on the reference point.

### <Supplementary note 3>

The route generation method according to Supplementary note 1 or 2, including setting the reference point at a left end or a right end of a work-completed area corresponding to the first travel route, and generating the second travel route in such a manner that a part of a work-scheduled area corresponding to the second travel route overlaps the reference point.

### <Supplementary note 4>

The route generation method according to Supplementary note 3, including generating the second travel route in such a manner that a terminal end of the work-completed area corresponding to the first travel route and a terminal end of the work-scheduled area corresponding to the second travel route overlap each other by a preset width.

### <Supplementary note 5>

The route generation method according to any one of Supplementary notes 1 to 4, including setting a starting end of the second travel route at a rear of the first travel route in a traveling direction of the work vehicle.

### <Supplementary note 6>

The route generation method according to any one of Supplementary notes 1 to 5, including generating the second travel route when a predetermined condition is satisfied after the work vehicle travels on the first travel route.

### <Supplementary note 7>

The route generation method according to Supplementary note 6, including generating the second travel route when the work vehicle travels backward by a predetermined distance or more after traveling on the first travel route, the predetermined distance being calculated based on at least one of an overall length of the work vehicle, a work width of a work machine provided in the work vehicle, left and right end positions of the work machine, and an overlapping width of individual work areas between adjacent travel routes.

<Supplementary note 8>

The route generation method according to any one of Supplementary notes 1 to 7, wherein the second travel route is an inclined route inclined with respect to the first travel route.

### <Supplementary note 9>

The route generation method according to Supplementary note 8, wherein the second travel route is a route for travel at a corner of the work area.

### <Supplementary note 10>

A route generation program for generating a travel route for a work vehicle to perform predetermined work in a work area, the route generation program causing one or a plurality of processors to execute generating, when stop information of travel or the work is acquired while the work vehicle is traveling on a first travel route, a second travel route for travel subsequently to the first travel route based on a predetermined position corresponding to a travel stop position or a work stop position of the work vehicle and a work width of the work vehicle.

### <Supplementary note 11>

A route generation system that generates a travel route for a work vehicle to perform predetermined work in a work area, the route generation system including a generation processing unit configured to generate, when stop information of travel or the work is acquired while the work vehicle is traveling on a first travel route, a second travel route for travel subsequently to the first travel route based on a predetermined position corresponding to a travel stop position or a work stop position of the work vehicle and a work width of the work vehicle.

### [Supplementary note 2 of invention]

Hereinafter, an overview of the invention extracted from the second embodiment will be supplementarily described. Note that configurations and processing functions, which are described in the following supplementary notes, can be selected and freely combined.

### <Supplementary note 1>

A route generation method for generating a travel route for a work vehicle to perform predetermined work in a work area, the route generation method including generating an autonomous travel route for causing the work vehicle to autonomously travel over a whole inner peripheral work area on an inner peripheral side except an outermost peripheral work area on an outermost periphery of the work area.

### <Supplementary note 2>

The route generation method according to Supplementary note 1, including generating a first travel route on which the work vehicle travels first out of the autonomous travel route based on position information of the outermost peripheral work area.

### <Supplementary note 3>

The route generation method according to Supplementary note 2, including:
specifying a position of the outermost peripheral work area based on an outer shape of the work area; and
generating the first travel route based on the position information of the outermost peripheral work area and a work width of the work vehicle.

### <Supplementary note 4>

The route generation method according to any one of Supplementary notes 1 to 3, including generating the autonomous travel route in such a manner that a part of a work trace in the inner peripheral work area and a part of a work trace in the outermost peripheral work area overlap each other by a preset setting amount.

### <Supplementary note 5>

The route generation method according to Supplementary note 4, wherein
the setting amount is changeable, and
the autonomous travel route is generated at a position corresponding to the setting amount.

### <Supplementary note 6>

The route generation method according to any one of Supplementary notes 1 to 5, wherein the autonomous travel route in the inner peripheral work area includes an inclined work route for generating a direction changing area for movement from the first travel route to the second travel route.

### <Supplementary note 7>

The route generation method according to any one of Supplementary notes 1 to 6, wherein when the work in the outermost peripheral work area is performed after the work in the inner peripheral work area is finished, whether the work in the outermost peripheral work area is performed by manual travel or by autonomous travel along an outline side of the work area is selectable.

### <Supplementary note 8>

The route generation method according to any one of Supplementary notes 1 to 7, including generating or updating an outer shape of the work area when the work in the outermost peripheral work area is finished.

### <Supplementary note 9>

The route generation method according to any one of Supplementary notes 1 to 8, wherein
the work vehicle is a harvest work vehicle configured to harvest a crop,
the route generation method including determining, before the outermost peripheral work area is to be worked, whether or not movement to a crop discharge position set in the work area is required based on an estimated harvest of the crop reaped by working the outermost peripheral work area and a remaining harvestable amount of the work vehicle.

### <Supplementary note 10>

A route generation program for generating a travel route for a work vehicle to perform predetermined work in a work area, the route generation program causing one or a plurality of processors to execute generating an autonomous travel route for causing the work vehicle to autonomously travel over a whole inner peripheral work area on an inner peripheral side except an outermost peripheral work area on an outermost periphery of the work area.

### <Supplementary note 11>

A route generation system that generates a travel route for a work vehicle to perform predetermined work in a work area, the route generation system including a generation processing unit configured to generate an autonomous travel route for causing the work vehicle to autonomously travel over a whole inner peripheral work area on an inner peripheral side except an outermost peripheral work area on an outermost periphery of the work area.

### [Supplementary note 3 of invention]

Hereinafter, an overview of the invention extracted from the third embodiment will be supplementarily described. Note that configurations and processing functions, which are described in the following supplementary notes, can be selected and freely combined.

### <Supplementary note 1>

A route generation method including executing:
setting a reference line, which passes through a predetermined position corresponding to a travel stop position or a work stop position of a work vehicle and has a predetermined angle with respect to a first travel route, in a case where stop information of travel or work is acquired while the work vehicle is traveling on the first travel route in a work area; and
generating a second travel route on which the work vehicle works at a corner generated at a connection portion between the first travel route and the reference line or generating a recommended area indicating a recommended work range of the corner.

### <Supplementary note 2>

The route generation method according to Supplementary note 1, wherein
the predetermined angle is changeable after the reference line is set, and
when the predetermined angle is changed, the second travel route or the recommended area is set based on the reference line with the changed predetermined angle.

### <Supplementary note 3>

The route generation method according to Supplementary note 2, including changing the predetermined angle when predetermined operation is received from an operator or when the work vehicle is in a predetermined state after the work vehicle starts traveling toward the reference line.

### <Supplementary note 4>

The route generation method according to Supplementary note 3, including changing the predetermined angle of the reference line based on a straight line passing through the predetermined position and a position of the work vehicle when the predetermined operation is received or a position of the work vehicle when the work vehicle is in the predetermined state.

### <Supplementary note 5>

The route generation method according to Supplementary note 3 or 4, wherein
the predetermined operation is any one of operation to stop the work vehicle, operation to cause the work vehicle to travel backward, and operation to change a work machine provided in the work vehicle from a work position to a non-work position, and
the predetermined state is any one of a state in which the work vehicle is stopped, a state in which the work vehicle starts traveling backward, and a state in which the work machine is changed from the work position to the non-work position.

### <Supplementary note 6>

The route generation method according to note 5, wherein
the predetermined operation is operation before the work vehicle reaches the reference line or after the work vehicle exceeds the reference line, and
the predetermined state is a state before the work vehicle reaches the reference line or after the work vehicle exceeds the reference line.

### <Supplementary note 7>

The route generation method according to any one of Supplementary notes 1 to 6, including:
setting a straight line as the reference line when predetermined operation is received from an operator or when the work vehicle is in a predetermined state after the work vehicle starts traveling in a direction inclined with respect to the first travel route, the straight line passing through the predetermined position and a position of the work vehicle when the predetermined operation is received or a position of the work vehicle when the work vehicle is in the predetermined state; and
generating the second travel route terminating on the reference line.

### <Supplementary note 8>

The route generation method according to any one of Supplementary notes 1 to 7, including notifying an operator when a distance from the work vehicle to the reference line is within a predetermined distance after the work vehicle starts traveling toward the reference line.

### <Supplementary note 9>

The route generation method according to any one of Supplementary notes 1 to 8, wherein the second travel route is a route for traveling at a corner of the work area, and is an inclined route inclined with respect to the first travel route.

### <Supplementary note 10>

A route generation program causing one or a plurality of processors to execute:
setting a reference line, which passes through a predetermined position corresponding to a travel stop position or a work stop position of a work vehicle and has a predetermined angle with respect to a first travel route, in a case where stop information of travel or work is acquired while the work vehicle is traveling on the first travel route in a work area; and
generating a second travel route on which the work vehicle works at a corner generated at a connection portion between the first travel route and the reference line or generating a recommended area indicating a recommended work range of the corner.

### <Supplementary note 11>

A route generation system including a generation processing unit configured to
set a reference line, which passes through a predetermined position corresponding to a travel stop position or a work stop position of a work vehicle and has a predetermined angle with respect to a first travel route, in a case where stop information of travel or work is acquired while the work vehicle is traveling on the first travel route in a work area; and
generate a second travel route on which the work vehicle works at a corner generated at a connection portion between the first travel route and the reference line or generate a recommended area indicating a recommended work range of the corner.

### LIST OF REFERENCE SIGNS

- 1: Combine harvester (work vehicle)
- 3: Operation terminal
- 10: Travel system
- 11: Vehicle control device
- 31: Operation control unit
- 111: Travel processing unit
- 112: Work processing unit
- 113: Registration processing unit
- 311: Setting processing unit
- 312: Generation processing unit
- 313: Output processing unit
- F: Field (work area)
- F0: Outermost peripheral area
- F1: Inner peripheral area
- Fc: Outermost peripheral position
- Fc1: Outermost peripheral position
- Fc2: Extension line
- Gk: Travel-scheduled area
- G0 to G5: Guide line
- T1 to T3: Reference point
- C1 to C4: Worked area (work-completed area)
- L0: Reference line
- L1: Inclined route
- L2: Inclined route
- L3: Inclined route
- La: Outline (reference line)
- La1: Outline (reference line)
- Lm: Predetermined distance
- Ls: Work target line (recommended area)
- N1: Communication network
- Pe0: Terminal end (predetermined position)
- R: Target route
- R1: Work route
- R21: Inclined route
- R22: Inclined route
- R3: Movement route
- Ra: Outermost peripheral route
- Rb: Inner peripheral route

## Claims

1. A route generation method for generating a travel route for a work vehicle to perform predetermined work in a work area, the route generation method comprising generating, when stop information of travel or the work is acquired while the work vehicle is traveling on a first travel route, a second travel route for travel subsequently to the first travel route based on a predetermined position corresponding to a travel stop position or a work stop position of the work vehicle and a work width of the work vehicle.

2. The route generation method according to claim 1, comprising, when the stop information is acquired, setting a reference point at the predetermined position corresponding to the first travel route, and generating the second travel route based on the reference point.

3. The route generation method according to claim 2, comprising setting the reference point at a left end or a right end of a work-completed area corresponding to the first travel route, and generating the second travel route in such a manner that a part of a work-scheduled area corresponding to the second travel route overlaps the reference point.

4. The route generation method according to claim 3, comprising generating the second travel route in such a manner that a terminal end of the work-completed area corresponding to the first travel route and a terminal end of the work-scheduled area corresponding to the second travel route overlap each other by a preset width.

5. The route generation method according to claim 1, comprising setting a starting end of the second travel route at a rear of the first travel route in a traveling direction of the work vehicle.

6. The route generation method according to claim 1, comprising generating the second travel route when a predetermined condition is satisfied after the work vehicle travels on the first travel route.

7. The route generation method according to claim 6, comprising generating the second travel route when the work vehicle travels backward by a predetermined distance or more after traveling on the first travel route, the predetermined distance being calculated based on at least one of an overall length of the work vehicle, a work width of a work machine provided in the work vehicle, left and right end positions of the work machine, and an overlapping width of individual work areas between adjacent travel routes.

8. The route generation method according to any one of claims 1 to 7, wherein the second travel route is an inclined route inclined with respect to the first travel route.

9. The route generation method according to claim 8, wherein the second travel route is a route for travel at a corner of the work area.

10. A route generation program for generating a travel route for a work vehicle to perform predetermined work in a work area, the route generation program causing one or a plurality of processors to execute generating, when stop information of travel or the work is acquired while the work vehicle is traveling on a first travel route, a second travel route for travel subsequently to the first travel route based on a predetermined position corresponding to a travel stop position or a work stop position of the work vehicle and a work width of the work vehicle.

11. A route generation system that generates a travel route for a work vehicle to perform predetermined work in a work area, the route generation system comprising a generation processing unit configured to generate, when stop information of travel or the work is acquired while the work vehicle is traveling on a first travel route, a second travel route for travel subsequently to the first travel route based on a predetermined position corresponding to a travel stop position or a work stop position of the work vehicle and a work width of the work vehicle.
